# EUROPÄISCHE PATENTSCHRIFT

(11) **EP 1 056 563 B1**
(45) Veröffentlichungstag und Bekanntmachung des Hinweises auf die Patenterteilung: **09.10.2002**
(21) Anmeldenummer: 99906180.7
(22) Anmeldetag: 21.01.1999
(51) Int. Cl.: B23B 29/04

(54) **VORRICHTUNG ZUM VERBINDEN EINES WERKZEUGKOPFS MIT EINEM SPANNSCHAFT**
DEVICE FOR CONNECTING A TOOL HEAD WITH A CLAMPING SHANK
DISPOSITIF POUR RACCORDER UNE TETE D'OUTIL A UNE TIGE DE SERRAGE

(30) Priorität: 23.01.1998 DE 19802334; 14.05.1998 DE 19821484; 13.11.1998 DE 19852397; 24.12.1998 DE 19860184
(43) Veröffentlichungstag der Anmeldung: 06.12.2000
(60) Teilanmeldung: 02006426.7
(73) Patentinhaber: KOMET Präzisionswerkzeuge Robert Breuning GmbH, D-74354 Besigheim (DE)
(72) Erfinder: STOLZ, Gerhard, D-74379 Ingersheim (DE)
(74) Vertreter: Wolf, Eckhard, Dr.-Ing.
(86) Internationale Anmeldenummer: EP9900380
(87) Internationale Veröffentlichungsnummer: WO99037428

(56) Entgegenhaltungen:
- WO-A-95/16533
- DE-A- 4 220 873
- DE-U- 9 212 205

## Beschreibung

Die Erfindung betrifft eine Vorrichtung zum Verbinden eines einen Werkzeugschaft aufweisenden Werkzeugkopfs mit einem eine Aufnahme für den Werkzeugschaft aufweisenden, vorzugsweise stirnseitig an einer Maschinenspindel angeordneten Spannschaft mit Hilfe eines Spannmechanismus, der mindestens zwei im Winkelabstand voneinander angeordnete, in ihrer Spannstellung den Werkzeugschaft und den Spannschaft kraftschlüssig miteinander verbindende Spannelemente und einen Betätigungsmechanismus zur begrenzten Verstellung der Spannelemente zwischen einer Lösestellung und einer Spannstellung aufweist. Eine solche Verbindungsvorrichtung ist beispielsweise bekannt aus der DE-U-9212205.
Die mit dem Betätigungsmechanismus verstellbaren Spannelemente dienen zur Erzeugung einer Anpreßkraft zwischen Planflächen der miteinander zu kuppelnden Teile. Bei einer bekannten Vorrichtung dieser Art sind die klauenoder klammerartigen Spannelemente mit ihrem einen Ende in die Aufnahme des Spannschafts eingesetzt, während sie sich mit ihrem anderen Ende in das Innere des hohl ausgebildeten Werkzeugschafts erstrecken. Sie sind mit je zwei in axialem Abstand voneinander angeordneten, einander zugewandten Spannschultern an im Inneren des Spannschafts und des hohlen Werkzeugschafts angeordneten, voneinander abgewandten Spannflächen abstützbar und mit dem Betätigungsmechanismus zwischen einer Lösestellung und einer Spannstellung verstellbar. Ein Nachteil der bekannten Vorrichtung besteht häufig darin, daß beim Spannvorgang relativ große Reibungs- und Federkräfte zu überwinden sind, die der Erzielung einer hohen Einspannkraft zwischen den zu kuppelnden Teilen entgegenwirken. Ein weiterer Nachteil der bekannten Kupplungsvorrichtung dieser Art besteht in dem relativ komplizierten, oft aus filigranen Einzelteilen bestehenden mechanischen Aufbau des Spannmechanismus, der vor allem bei kleinen Baugrößen zu Festigkeits- und Montageproblemen führt.

Ausgehend hiervon liegt der Erfindung zugrunde, eine Verbindungsvorrichtung der eingangs angegebenen Art zu entwickeln, die einfach herstellbar und montierbar ist.

Zur Lösung dieser Aufgabe werden die im Patentanspruch 1 angegebenen Merkmale vorgeschlagen. Vorteilhafte Ausgestaltungen und Weiterbildungen der Erfindung ergeben sich aus den abhängigen Ansprüchen.

Zur Lösung dieser Aufgabe wird gemäß der Erfindung primär vorgeschlagen, daß der Spanneinsatz an seinen stirnseitigen Enden von je einem kolbenartigen Zentrierelement übergriffen ist und daß die zentrierelemente durch achsparallele Stege unter Bildung eines den Spannmechanismus mit axialem Spiel übergreifenden Zentrierkäfigs starr miteinander verbunden sind und in je eine achszentrale, vorzugsweise zylindrische Ausnehmung im Bodenbereich des Spannschafts und des vorzugsweise als Hohlschaft ausgebildeten Werkzeugschafts unter Freilassung eines axialen Freiraums eingreifen.

Der Zentrierkäfig ist zweckmäßig als unter der Einwirkung des Betätigungsmechanismus beim Lösen des Spannmechanismus den Werkzeugschaft vom Spannschaft axial trennendes Auswurfelement ausgebildet. Eine bevorzugte Ausgestaltung der Erfindung sieht vor, daß der Zentrierkäfig an seinem spannschaftseitigen Zentrierelement über den Freiraum in Richtung Hohlschaft mit einem Fluiddruck beaufschlagbar ist. Die Stege können unter Bildung je eines Kühlmittelrohrs hohl ausgebildet sein, während die kolbenartigen Zentrierelemente mit den Kühlmittelrohren kommunizierende Zu- und Auslauföffnungen aufweisen. Der Spannmechanismus mit dem Betätigungsmechanismus einerseits und der als Kühlmittelbrücke ausgebildete Zentrierkäfig andererseits bilden im montierten Zustand eine Baueinheit, die bei der Montage mit einem einfachen Handgriff in den Spannschaft eingesetzt und dort beispielsweise mit dem Arretierungsbolzen verriegelt werden kann.

Vorteilhafterweise weist das spannschaftseitige Zentrierelement mindestens eine achsparallel ausgerichtete Zulauföffnung auf und kann mit einer Radialdichtung innerhalb der zugehörigen Ausnehmung abgedichtet werden. Um Prallflächen in der Zuleitung zu vermeiden, die zu einer Entmischung des Kühlmittelfluids führen könnten, ist es von Vorteil, wenn mindestens eine Zulauföffnung über einen schrägen kantenfreien Zulaufkanal mit einem spannschaftseitigen Zentralkanal verbunden ist. Eine solche Anordnung ist vor allem für die Minimalmengenschmierung von Vorteil, bei der statt eines flüssigen Kühlschmiermittels ein mit Ölpartikeln beladenes Trägergas (Aerosol) als Kühlmittelfluid verwendet wird.

Das hohlschaftseitige Zentrierelement weist zweckmäßig eine vorzugsweise über schräge kantenfreie Auslaufkanäle mit den Kühlmittelrohren kommunizierende zentrale Auslauföffnung auf und kann mit einer die Auslauföffnung außenseitig umgebenden Dichtung innerhalb der zugehörigen Ausnehmung abgedichtet werden. Um im Falle der Minimalmengenschmierung Abscheidungen und Druckverluste im strömenden Kühlfluid zu verhindern, wird gemäß einer bevorzugten Ausgestaltung der Erfindung vorgeschlagen, daß der spannschaftseitige Zentralkanal, die Zulaufkanäle, die Kühlmittelrohre, die Auslaufkanäle und die zentrale Auslauföffnung einen im wesentlichen konstanten oder abschnittsweise stetig zu- oder abnehmenden Strömungsquerschnitt aufweisen.

Gemäß einer bevorzugten Ausgestaltung der Erfindung ist die hohlschaftseitige Dichtung als Axialdichtung ausgebildet. Diese Anordnung hat den Vorteil, daß die Dichtung beim Werkzeugwechsel nicht beschädigt werden kann. Es kann dort auch eine Lippendichtung vorgesehen werden, deren Dichtlippe unter der Einwirkung des Kühlmitteldrucks gegen eine Bodenfläche oder eine Mantelfläche der hohlschaftseitigen Ausnehmung anpreßbar ist. Wenn der Werkzeugkopf somit nach dem Kupplungsvorgang über einen spannschaftseitigen Kanal unter Druck mit Kühlschmiermittel beaufschlagt wird, wird der Zentrierkäfig unter der Einwirkung des Kühlschmiermittels in Richtung Werkzeugkopf verschoben, so daß das hohlschaftseitige Zentrierelement mit seiner Dichtung zur Anlage kommt. Eine weitere Verbesserung in dieser Hinsicht wird dadurch erzielt, daß zwischen dem Spannschaft und dem Zentrierkäfig ein den Zentrierkäfig leicht in Richtung Werkzeugkopf drückendes Federorgan angeordnet ist. Das Federorgan kann dabei als in einer zylindrischen Ausnehmung des Spannschafts angeordnete, zwischen dem Spannschaft und dem spannschaftseitigen Zentrierelement leicht vorgespannte Schraubendruckfeder ausgebildet sein. Die leichte Vorspannung ist dabei so zu wählen, daß der Zentrierkäfig zuverlässig in Richtung Werkzeugkopf verschoben wird und dennoch keinen nennenswerten Widerstand beim Spannvorgang darstellt.

Das spannschaftseitige Zentrierelement kann eine achszentrale Tasche zur axial und radial schwimmenden Aufnahme von über den Spanneinsatz axial überstehenden spannschaftseitigen Enden der Spannelemente aufweisen.

Ein wesentlicher Vorteil des Spanneinsatzes mit geteilten Spannelementen besteht in der leichteren Montage und Demontage bei vorkonfektioniertem Zentrierkäfig. Dabei sind die Spannelemente zweckmäßig lösbar in den vorgefertigten Zentrierkäfig eingesetzt.

Um das Einführen des Hohlschafts in die Hohlschaftaufnahme des Spannschafts zu erleichtern, wird gemäß einer bevorzugten Ausgestaltung der Erfindung vorgeschlagen, daß zwischen dem Spanneinsatz und dem Zentrierkäfig ein den Zentrierkäfig in Richtung Spannschaft vorspannendes Federelement angeordnet ist. Die Federkraft des Federelements ist so zu wählen, daß die unter der Einwirkung des Kühlmitteldrucks am Zentrierkäfig angreifenden Kräfte die Federkraft überwinden können. Das Federelement kann zugleich als Zentrierorgan für den Spanneinsatz ausgebildet werden. Insbesondere kann das Federelement als Schraubendruckfeder ausgebildet werden, die mit ihrem einen Ende in zur Spannschaftseite offene Teilkreisausnehmungen der Spannelemente eingreift und mit ihrem anderen Ende am spannschaftseitigen Zentrierelement abgestützt ist. Um einen Wuchtausgleich zu erzielen, ist es von Vorteil, wenn die Spannelemente des Spanneinsatzes über das Federelement radial nach außen oder nach innen gedrückt werden, so daß sie keinem freien Radialspiel ausgesetzt sind. Letzteres kann dadurch erfolgen, daß die Spannelemente je eine einseitig nach innen oder nach außen weisende schräge Abstützschulter für das vorzugsweise als Schraubendruckfeder ausgebildete Federelement aufweisen. Mit diesen Maßnahmen wird erreicht, daß aufgrund der symmetrischen Gestaltung die Hauptträgheitsachse mit der Drehachse zusammenfällt, was vor allem für die Hochgeschwindigkeitsbearbeitung von Vorteil ist.

Alternativ dazu kann das Federelement als Druckfeder ausgebildet sein, die mit ihrem einen Ende an dem Zwischenglied und mit ihrem anderen Ende am spannschaftseitigen Zentrierelement abgestützt ist. Die axial überstehenden spannschaftseitigen Enden der Spannelemente können dabei eine achszentrale Aufnahme für ein als Rolle oder Kugel ausgebildetes Zwischenelement bilden. Sie ergänzen sich zweckmäßig in der Spannstellung zu einer konischen, zum Spannschaft hin verjüngenden und in der Lösestellung zu einer zylindrischen Außenfläche, die zweckmäßig senkrecht an die radial nach außen weisenden spannschaftseitigen Endflächen der Spannelemente anschließt.

Ein weiterer erfindungsgemäßer Aspekt besteht darin, daß durch eine zusätzliche, in Spannrichtung des Betätigungsmechanismus auf die Spannelemente wirkende Federkraft auch mit relativ geringen, auf das Betätigungselement wirkenden Kräften eine hohe Einspannkraft erzielt werden kann. Vorteilhafterweise sind die Spannelemente hierbei in ihrer Lösestellung unter der Einwirkung der Federkraft in Spannrichtung vorgespannt. Die Federkraft kann in Spannrichtung abnehmen, so daß die Spannelemente in ihrer Spannstellung bezüglich der Federkraft im wesentlichen vorspannungsfrei sind. Dadurch können in der Spannstellung der Spannelemente auch die ansonsten der Einspannkraft entgegenwirkenden Reibungskräfte innerhalb des Spannmechanismus und des Betätigungsmechanismus minimiert werden.

Eine bevorzugte Ausgestaltung der Erfindung sieht vor, daß zwei in Spannrichtung einander gegenüberliegende Spannelemente über ein in der Lösestellung des Betätigungsmechanismus in Spannrichtung vorgespanntes Federelement vorzugsweise einstückig miteinander verbunden sind, wobei das Federelement in der Spannstellung des Betätigungsmechanismus zweckmäßig ganz oder nahezu entspannt ist.

Eine weitere vorteilhafte oder alternative Ausgestaltung der Erfindung sieht vor, daß zwei einander radial gegenüberliegende Spannelemente oder Spannelementpaare an ihrem spannschaftseitigen Ende unter Bildung eines einstükkigen Spanneinsatzes über ein Biegegelenk einstückig miteinander verbunden und über den Betätigungsmechanismus um die Biegeachse des Biegegelenks radial gegeneinander verbiegbar sind. Vorteilhafterweise weist dabei das Biegegelenk des Spanneinsatzes die Gestalt einer über die spannschaftseitigen Enden der Spannelemente oder der Spannelementpaare axial überstehenden, U-förmigen Federschlaufe auf.

Um die Einspannkräfte über den Umfang des Hohlschafts und des Spannschafts gleichmäßig verteilen zu können, wird gemäß einer bevorzugten Ausgestaltung der Erfindung vorgeschlagen, daß die Spannelementpaare an ihren spannschaftseitigen Enden paarweise über ein zweites, quer zum ersten Biegegelenk ausgerichtetes Biegegelenk einstückig miteinander verbundene und um deren Biegeachse mit Hilfe des Betätigungsmechanismus gegeneinander verbiegbare Spannelemente aufweisen. Zumindest das erste Biegegelenk ist in der Spannstellung der Spannelemente vorspannungsfrei und in der Lösestellung federelastisch vorgespannt.

Alternativ hierzu wird gemäß der Erfindung vorgeschlagen, daß zwei einander radial gegenüberliegende Spannelemente oder Spannelementpaare als getrennte Teile ausgebildet sind, die unter Bildung eines Spanneinsatzes an ihren spannschaftseitigen Enden oder in axialem Abstand von diesen unmittelbar oder mittelbar über ein Zwischenglied gegeneinander anliegen und über den Betätigungsmechanismus um die durch die Anlagestelle gebildete Kippachse im wesentlichen radial gegeneinander verschwenkbar sind.

Auch in diesem Falle ist es von Vorteil, wenn die Spannelementpaare an ihren spannschaftseitigen Enden paarweise über ein quer zur Kippachse ausgerichtetes Biegegelenk einstückig miteinander verbundene und um dessen Biegeachse mit Hilfe des Betätigungsmechanismus gegeneinander verbiegbare Spannelemente aufweisen. Vorteilhafterweise sind die spannschaftseitigen Enden der Spannelemente oder Spannelementpaare im Bereich der Anlagestelle ballig ausgebildet. Das Zwischenglied ist vorteilhafterweise als lose zwischen die spannschaftseitigen Enden eingelegte Rolle oder Kugel ausgebildet. Um gegenseitige axiale Verschiebungen der Spannelemente oder Spannelementpaare zu vermeiden, können die spannelementseitigen Enden über eine Feder, beispielsweise über einen Federring oder eine Federklammer zusammengehalten werden.

Eine bevorzugte oder alternative Ausgestaltung der Erfindung sieht vor, daß der Betätigungsmechanismus zwei in je eine stirnseitig sowie radial nach innen offene Ausnehmung der einander radial gegenüberliegenden Spannelemente oder Spannelementpaare einsetzbare Druckstücke sowie mindestens ein Schraubelement zur Verstellung des Abstands zwischen den Druckstücken aufweist. Das Schraubelement kann dabei als Differentialschraube ausgebildet sein, die mit ihren Gewindepartien in miteinander fluchtende, radial ausgerichtete gegenläufige Gewinde der Druckstücke eingreift.

Die Druckstücke können grundsätzlich auch über ein vorzugsweise als Federschlaufe ausgebildetes Biegegelenk einstückig miteinander verbunden sein. In diesem Falle ist das Schraubelement zweckmäßig als durch ein Innengewinde eines der Druckstücke hindurchgreifender und mit seiner Stirnfläche gegen ein Widerlager des anderen Druckstücks anliegender Gewindebolzen ausgebildet. Vorteilhafterweise greift durch ein Innengewinde des anderen Druckstücks ein zweiter Gewindebolzen hindurch, dessen Stirnfläche das Widerlager für den ersten Gewindebolzen bildet.

Um beim Spannvorgang zusätzlich eine Spreizwirkung zwischen den Spannelementen eines jeden Spannelementpaares zu erzielen, weisen die Druckstücke vorteilhafterweise ein zum benachbarten Spannelementpaar hin balliges oder keilförmiges Profil auf. Zur Verbesserung der Spreizwirkung kann das ballige oder keilförmige Profil der Druckstücke in eine in Zustellrichtung flachere Zustellschräge und eine daran anschließende steilere Spannschräge unterteilt werden.

Gemäß einer bevorzugten Ausgestaltung der Erfindung weisen die Druckstücke eine zum benachbarten Spannelement hin teilzylindrische Druckfläche auf, mit der sie beim Spannvorgang auf der vorzugsweise ebenen Anschlagfläche des Spannelements abrollen können. Um die Anpreßkraft im Spannzustand auf eine größere Fläche zu verteilen, ist es von Vorteil, wenn die Druckfläche eine an den teilzylindrischen Abschnitt anschließende, in der Spannstellung der Druckstücke gegen die Anlagefläche flächig anliegende ebene Scheitelfläche aufweist. Eine weitere Verbesserung in dieser Hinsicht wird dadurch erzielt, daß das Innengewinde der Druckstücke und das Außengewinde des Schraubelements ein den Toleranzausgleich zulassendes Spiel aufweisen.

Eine vorteilhafte Ausgestaltung der Erfindung sieht vor, daß die Spannelemente und/oder die Druckstücke oberflächengehärtet sind oder eine verschleißfeste und/oder reibungsmindernde Oberflächenbeschichtung tragen, die entweder als Hartstoffschicht, beispielsweise aus Metall, oder als Weichstoffschicht, beispielsweise aus Graphit oder Polyfluortetraethylen ausgebildet sein kann.

Die Spannelemente eines jeden Spannelementpaares sind vorteilhafterweise durch je einen vorzugsweise bis zum zweiten Biegegelenk durchgehenden Axialspalt voneinander getrennt. Dadurch wird zugleich erreicht, daß durch die Axialspalte hindurch ein an dem Schraubelement oder an der Gewindespindel angeordneter Eingriff für ein Schraubwerkzeug radial zugänglich wird. Für den Durchgriff des Schraubwerkzeugs zum Betätigungsmechanismus können zusätzlich auch der Spannschaft und der Hohlschaft miteinander fluchtende Durchbrüche aufweisen.

Um die Spannelemente oder Spannelementpaare von ihrer Spannstellung aus in die vorgespannte Lösestellung bringen zu können, wird gemäß einer bevorzugten Ausgestaltung der Erfindung vorgeschlagen, daß die Druckstücke je einen Mitnehmernocken aufweisen, der gegen eine radial nach außen weisende Anschlagfläche der zugehörigen Spannelemente oder Spannelementpaare anliegt und diese beim Betätigen in Richtung Lösestellung mitnimmt.

Eine weitere vorteilhafte Ausgestaltung der Erfindung sieht vor, daß die spannschaftseitigen Spannflächen und die zugehörigen Spannschultern der Spannelemente im wesentlichen in einer Radialebene ausgerichtet sind, während die hohlschaftseitigen Spannflächen und die zugehörigen Spannschultern der Spannelemente als gegenüber den spannschaftseitigen Spannflächen und -schultern radial nach außen divergierende Schräg- oder Konusflächen ausgebildet sind. Um über den Umfang hinweg eine möglichst gleichmäßige Einspannung zwischen Hohlschaft und Spannschaft zu erzielen, ist es von Vorteil, wenn die Spannschultern der Spannelemente eines jeden Spannelementpaares einen auf die Spannschaftachse bezogenen Zentralwinkel von 30° bis 120°, vorzugsweise 50° bis 90° miteinander einschließen.

Die hohlschaftseitigen Spannschultern der Spannelemente sind in Umfangsrichtung durch im wesentlichen radial ausgerichtete Begrenzungskanten und in radialer Richtung durch eine im wesentlichen in Umfangsrichtung ausgerichtete Begrenzungskante begrenzt. Um beim Spannvorgang unter Berücksichtigung der gegebenen Maßtoleranzen lokale Druckspitzen im Bereich der Spannschultern zu vermeiden, wird gemäß einer bevorzugten Ausgestaltung der Erfindung vorgeschlagen, daß zumindest eine der Begrenzungskanten konvex gerundet oder angefast ist.

Eine besonders einfache Montage des Spanneinsatzes wird dadurch ermöglicht, daß der Spanneinsatz mit seinen spannschaftseitigen Spannschultern bajonettartig mit dem Spannschaft verriegelbar und in der Verriegelungsstellung formschlüssig gegen Verdrehung sicherbar ist. Zur Verdrehsicherung kann der Spanneinsatz in seiner Verriegelungsstellung mittels einer die Spannfläche des Spannschafts achsparallel durchdringenden, in eine radial randoffene Ausnehmung eines der Spannelemente oder Spannelementpaare formschlüssig eingreifenden Arretierungsbolzens festgelegt werden. Wahlweise kann der Spanneinsatz um 180° verdreht in den Spannschaft eingesetzt und dort verriegelt werden.

Gemäß einer bevorzugten Ausgestaltung der Erfindung weist der Hohlschaft eine sich zu seinem freien Ende kegelförmig verjüngende Außenfläche und der Spannschaft eine entsprechend konische Aufnahme auf. Die Einspannung erfolgt zweckmäßig dadurch, daß der Hohlschaft von einer Ringschulter begrenzt ist, die in der Spannstellung der Spannelemente gegen eine ringförmige Planfläche des Spannschafts anpreßbar ist.

Da der kegelförmige Hohlschaft und die konische Aufnahme im Spannzustand selbsthemmend miteinander verbunden sind, ist für den Werkzeugwechsel zusätzlich ein Auswurfmechanismus erforderlich. Eine bevorzugte Ausgestaltung der Erfindung sieht daher vor, daß die Druckstücke an ihren einander zugewandten Seiten einen Spalt begrenzen, in den ein auf der Hohlschaftseite, vorzugsweise am hohlschaftseitigen Zentrierelement überstehender, unter der Einwirkung der Druckstücke mit einer axialen Kraft beaufschlagbarer Auswurfkeil eingreift. Zweckmäßig sind die zum Auswurfkeil weisenden Spaltränder des Druckstücks keilförmig angefast.

Gemäß einer weiteren bevorzugten oder alternativen Ausgestaltung der Erfindung ist ein den Spannschaft außenseitig umgreifender, an seinen beiden Rändern gegenüber dem Spannschaft abdichtbarer Verschlußring vorgesehen, der zwischen je einer die Durchbrüche verschließenden und freigebenden Endstellung begrenzt axial gegenüber dem Spannschaft verschiebbar ist. Der Spannschaft weist zu diesem Zweck im Bereich der Durchbrüche eine ringförmige Eindrehung auf, an die sich über je eine Ringstufe zur Stirnseite des Spannschafts hin einen Auflaufbereich größeren Durchmessers und zur Wurzel des Spannschafts hin ein Führungsbereich größeren Durchmessers anschließt, während der Verschlußring je einen in der ringförmigen Eindrehung und im Führungsbereich gegen die Außenfläche des Spannschafts anliegenden Dichtring aufweist. In der Schließstellung des Verschlußrings ist zweckmäßig mindestens einer der Dichtringe in eine ringförmige Rastvertiefung des Spannschafts einrastbar.

Gemäß einer weiteren bevorzugten oder alternativen Ausgestaltung der Erfindung weist der Hohlschaft an seinem freien Ende mindestens eine Nut für den Eingriff eines spannschaftseitigen Mitnehmers auf, während der Spannschaft mindestens eine seitlich gegen eine Axialebene versetzte Bohrung zur Aufnahme eines in die Nut oder in eine Ausnehmung des Hohlschafts eingreifenden, das Spiel des Mitnehmers in der Nut in einer Drehrichtung des Spannschafts eliminierenden, biegeelastisch ausgebildeten Bolzens aufweist. Die Bohrung ist dabei zweckmäßig als Gewindebohrung zur Aufnahme des ein entsprechendes Gewinde aufweisenden Biegebolzens ausgebildet. Der Biegebolzen weist vorteilhafterweise einen Gewindeabschnitt, einen Biegeabschnitt und einen am freien Ende des Biegeabschnitts hammerartig verdickenden Mitnehmerabschnitt auf. Mit dem erfindungsgemäßen Biegebolzen wird das Spiel zwischen der Nut und dem Mitnehmer einseitig in Belastungsrichtung beseitigt, wobei der Mitnehmer an der Nutenflanke anliegt, über die das Drehmoment, welches aus der Hauptschnittkraft resultiert, aufgenommen wird. Um die Spannvorrichtung sowohl bei linksdrehenden als auch bei rechtsdrehenden Werkzeugen einsetzen zu können, ist es von Vorteil, wenn zwei zu der Axialebene spiegelsymmetrisch angeordnete Bohrungen zur wahlweisen Aufnahme eines Biegebolzens im Spannschaft angeordnet sind.

Im folgenden wird die Erfindung anhand der in der Zeichnung in schematischer Weise dargestellten Ausführungsbeispiele näher erläutert. Es zeigen
- Fig. 1a bis c: einen Längsschnitt durch eine Schnittstelle zwischen einer Maschinenspindel und einem Werkzeugkopf mit integriertem Spannmechanismus in Spannstellung mit drei verschiedenen Ausgestaltungen der Druckstücke;
- Fig. 2a bis d: eine Baueinheit bestehend aus einem Spanneinsatz, einem Betätigungsmechanismus und einem Zentrierkäfig in verschiedenen Schnittdarstellungen;
- Fig. 3a und b: ausschnittsweise Darstellungen entsprechend Fig. 1a mit zwei abgewandelten hohlschaftseitigen Dichtungsvarianten;
- Fig. 4a bis d: den einstückigen Spanneinsatz ohne Betätigungsmechanismus in verschiedenen Teilschnitten und Ansichten;
- Fig. 5a und b: einen ausschnittsweisen Längsschnitt durch eine Schnittstelle in Spannstellung und in Lösestellung des Spanneinsatzes;
- Fig. 6: eine Darstellung entsprechend Fig. 5a für ein abgewandeltes Ausführungsbeispiel;
- Fig. 7: einen Längsschnitt durch ein weiteres Ausführungsbeispiel einer Schnittstelle in einer Darstellung entsprechend Fig. 1a;
- Fig. 8a: ein gegenüber Fig. 7 abgewandeltes Ausführungsbeispiel einer Schnittstelle;
- Fig. 8b: einen vergrößerten Ausschnitt aus Fig. 8a;
- Fig. 9: einen Längsschnitt durch ein weiteres Ausführungsbeispiel einer Schnittstelle in einer Darstellung entsprechend Fig. 1a;
- Fig. 10: ein weiteres abgewandeltes Ausführungsbeispiel einer Schnittstelle in einer Darstellung entsprechend Fig. 1a;
- Fig. 11a und b: einen Querschnitt und einen Längsschnitt durch den Spannschaft mit Hohlkegelaufnahme für eine Schnittstelle entsprechend Fig. 1 bis 10;
- Fig. 11c: einen vergrößerten Ausschnitt aus Fig. 11a mit einer Darstellung eines biegeelastischen Bolzens;
- Fig. 12a und b: eine Darstellung entsprechend Fig. 5a und b für ein abgewandeltes Ausführungsbeispiel;
- Fig. 12c: den Zentrierkäfig für den Spanneinsatz nach Fig. 12a und b;
- Fig. 12d: einen Schnitt durch den Spanneinsatz nach Fig. 12a und b im Bereich des Betätigungsmechanismus;
- Fig. 13a und b: einen vergrößerten Ausschnitt aus Fig. 12b aus dem Bereich des spannschaftseitigen Zentrierkäfigs mit Wuchtausgleich an den spannschaftseitigen Enden der Spannelemente;
- Fig. 14: ein gegenüber Fig. 12c abgewandeltes Ausführungsbeispiel des Zentrierkäfigs für die Minimalmengenschmierung.

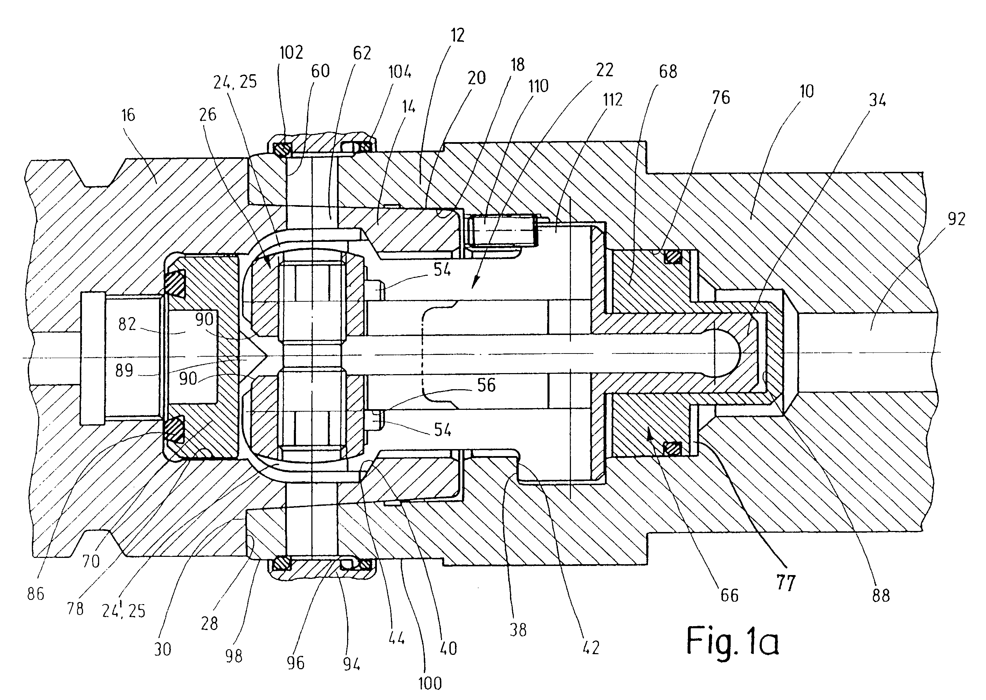

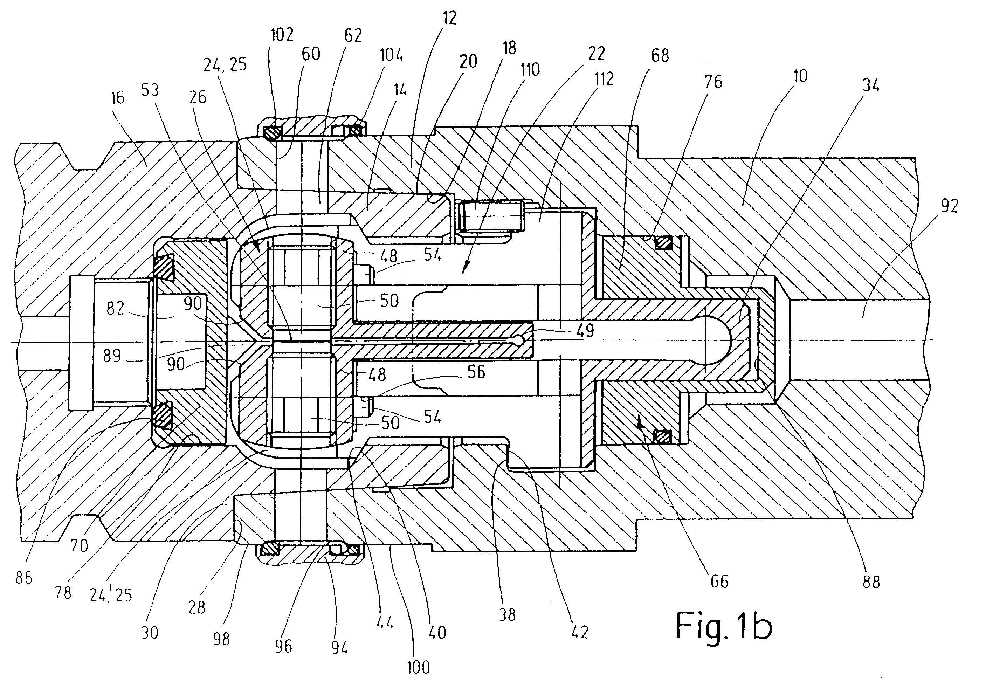

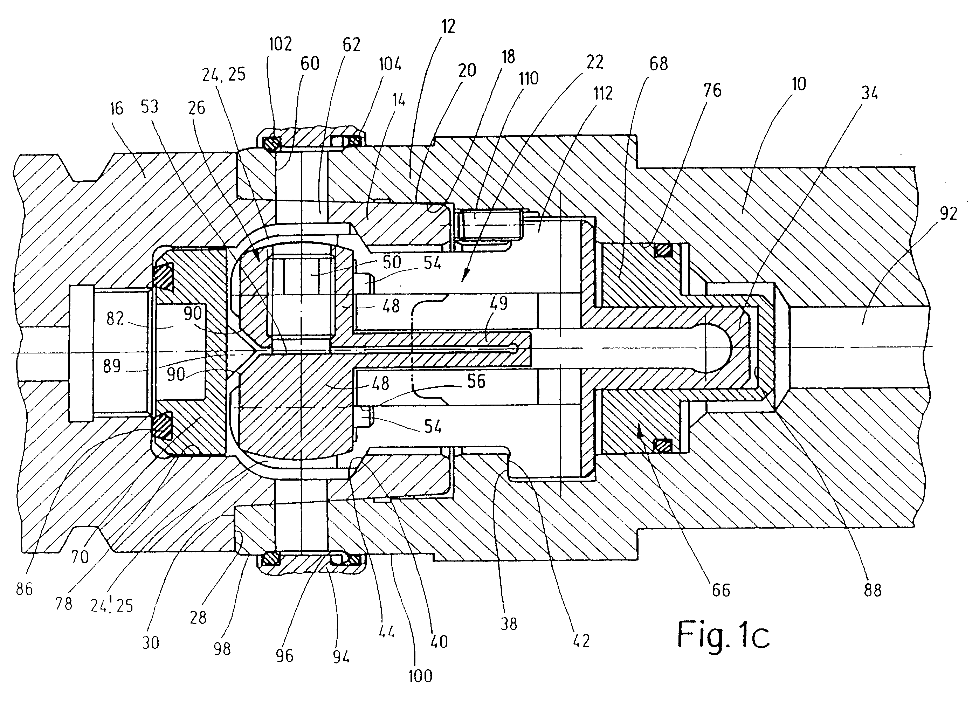

Die in den Figuren 1 bis 4 dargestellte Schnittstelle besteht im wesentlichen aus einem am stirnseitigen Ende einer Maschinenspindel 10 angeordneten Spannschaft 12, einem einen Werkzeugschaft 14 aufweisenden Werkzeugkopf 16, einer im Spannschaft 12 angeordneten konischen Aufnahme 18 für den an seiner Außenfläche 20 kegelförmigen Werkzeugschaft 14 sowie einen Spannmechanismus 22, der bei dem gezeigten Ausführungsbeispiel zwei im Winkelabstand voneinander angeordnete Spannelementpaare 24,24' und einen Betätigungsmechanismus 26 zur begrenzten Verstellung der Spannelementpaare zwischen einer Lösestellung und einer Spannstellung aufweist. Der Spannschaft 12 und/oder der Werkzeugschaft 14 können auch Bestandteile eines Adapters oder eines Verlängerungsstücks sein.

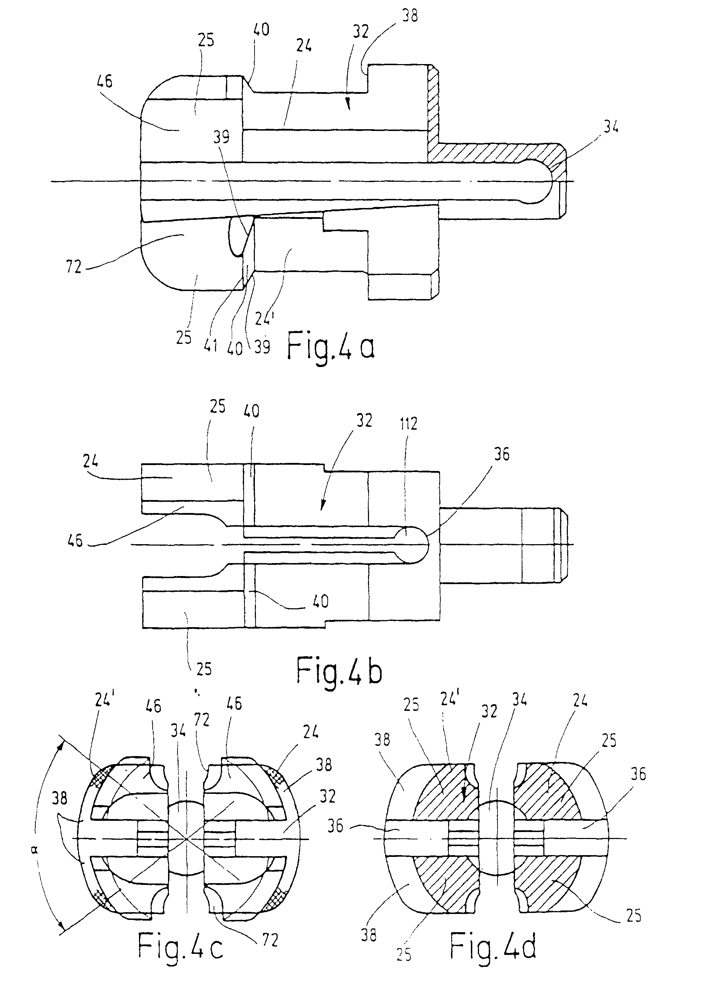

Der Spannmechanismus 22 hat primär die Aufgabe, im Spannzustand die Anpreßkraft zwischen den einander zugewandten ringförmigen Planflächen 28,30 des Werkzeugkopfs 16 und des Spannschafts 12 zu erzeugen. Eine weitere Funktion des Spannmechanismus 22 besteht darin, den Werkzeugkopf 16 beim Lösevorgang aus der Aufnahme 18 unter Auftrennung der selbsthemmenden Verbindung zwischen dem Werkzeugschaft 14 und der konischen Aufnahme 18 auszuwerfen. Der Spannmechanismus weist zu diesem Zweck den in Fig. 4a bis d gezeigten einstückigen Spanneinsatz 32 auf, dessen Spannelementpaare 24,24' über ein spannschaftseitig angeordnetes Biegegelenk 34 miteinander verbunden und über den Betätigungsmechanismus 26 um die Biegeachse des Biegegelenks 34 im wesentlichen radial gegeneinander verbiegbar sind. Das Biegegelenk 34 weist die Gestalt eines über die spannschaftseitigen Enden der Spannelemente 24,24' axial überstehenden, U-förmigen Federschlaufe auf. Die Spannelementpaare 24,24' weisen ihrerseits an ihren spannschaftseitigen Enden paarweise über ein zweites, quer zum ersten Biegegelenk 34 ausgerichtetes Biegegelenk 36 einstückig miteinander verbundene und um deren Biegeachse mit Hilfe des Betätigungsmechanismus 26 gegeneinander verbiegbare klauenartige Spannelemente 25 auf.

Wie aus Fig. 1a bis c zu ersehen ist, sind die Spannelemente 25 mit je zwei in axialem Abstand voneinander angeordneten, einander zugewandten Spannschultern 38,40 an im Inneren des Spannschafts 12 und des als Hohlschaft ausgebildeten Werkzeugschafts 14 angeordneten, voneinander abgewandten Spannflächen 42,44 abstützbar. Die spannschaftseitigen Spannflächen 42 und die zugehörigen Spannschultern 38 der Spannelemente 25 sind im wesentlichen in einer Radialebene ausgerichtet, während die hohlschaftseitigen Spannflächen 44 und die zugehörigen Spannschultern 40 der Spannelemente 25 als gegenüber den spannschaftseitigen Spannflächen und -schultern 42,38 radial nach außen divergierende Konusflächen ausgebildet sind. Wie insbesondere aus Fig. 4c zu ersehen ist, schließen die Spannschultern 40 der Spannelemente 25 eines jeden Spannelementpaars 24,24' einen auf die Spannschaftachse bezogenen Zentralwinkel α von 50° bis 90° ein. Dadurch wird eine weitgehend gleichmäßige Krafteinleitung über den Umfang des Werkzeugschafts 14 erzielt.

Wie insbesondere aus Fig. 4a zu ersehen ist, sind die hohlschaftseitigen Spannschultern 40 der Spannelemente 25 in Umfangsrichtung durch im wesentlichen radial ausgerichtete Begrenzungskanten 39 und in radialer Richtung durch eine im wesentlichen in Umfangsrichtung ausgerichtete Begrenzungskante 41 begrenzt. Um bei den gegebenen Maßtoleranzen lokale Druckspitzen beim Spannvorgang zu vermeiden, ist zumindest eine der Begrenzungskanten 39,41 konvex gerundet oder angefast.

Der Spanneinsatz 32 ist mit seinen spannschaftseitigen Spannschultern 38 bajonettartig mit den Spannflächen 42 des Spannschafts 12 verriegelbar und in der Verriegelungsstellung mittels eines Arretierungsbolzens 110 formschlüssig gegen Verdrehen sicherbar. In den Fig. 1a bis c ist zu erkennen, daß der Arretierungsbolzen 110 die Spannfläche 42 des Spannschafts 12 achsparallel durchdringt und in eine radial randoffene Ausnehmung 112 zwischen den beiden Spannschultern 38 eines der Spannelementpaare 24,24' formschlüssig eingreift.

Der Betätigungsmechanismus 26 weist zwei in je eine stirnseitig sowie radial nach innen offene Ausnehmung 46 der einander radial gegenüberliegenden Spannelementpaare 24,24' einsetzbare Druckstücke 48 sowie mindestens ein Schraubelement 50 zur Verstellung des Abstands zwischen den Druckstücken 48 auf. Bei dem in Fig. 1a gezeigten Ausführungsbeispiel sind zwei voneinander unabhängige Druckstücke 48 vorgesehen. Das Schraubelement 50 ist in diesem Fall als Differentialschraube ausgebildet, die mit ihren Gewindepartien 51 in miteinander fluchtende, radial ausgerichtete gegenläufige Innengewinde 52 der Druckstücke 48 eingreift. Bei den in Fig. 1b und c gezeigten Ausführungsbeispielen sind die Druckstücke 48 über ein als axial überstehende Federschlaufe ausgebildetes Biegegelenk 49 einstückig miteinander verbunden. Als Schraubelemente sind im Falle der Fig. 1b zwei an einer stirnseitigen Anschlagfläche 53 gegeneinander anschlagende Schraubbolzen 50 vorgesehen, wohingegen im Falle der Fig. 1c nur eines der Druckstücke 48 von einem Schraubbolzen 50 durchdrungen ist, während das andere Druckstück massiv ausgebildet ist und eine Widerlagerfläche 53 für den Schraubbolzen 50 aufweist.

Die Druckstücke 48 weisen ihrerseits ein im wesentlichen radial nach außen zum benachbarten Spannelementpaar 24,24' hin balliges oder keilförmiges Profil auf, das dafür sorgt, daß die Spannelemente 25 der Spannelementpaare 24,24' beim Spannvorgang um das zweite Biegegelenk 36 aufgespreizt werden. Weiter ist an den Druckstücken 48 je ein Mitnehmernocken 54 angeformt, der gegen eine radial nach außen weisende Anschlagfläche 56 der zugehörigen Spannelementpaare 24,24' anliegt. Da die Spannelementpaare 24,24' im Bereich ihres Biegegelenks 34 in der Spannstellung vorspannungsfrei sind, werden sie beim Betätigen des Betätigungsmechanismus 26 in Richtung Lösestellung unter Erzeugung einer elastischen Vorspannkraft an ihren Anschlagflächen 56 durch die Mitnehmernocken 54 radial nach innen mitgenommen. Zur Betätigung des Schraubelements 50 weist dieses an seinen Stirnseiten Eingrifföffnungen 58 auf, in die von außen her durch Durchbrüche 60,62 im Spannschaft 12 und im Werkzeugschaft 14 und durch die zwischen jeweils zwei Spannelementen 25 eines jeden Spannelementpaars 24,24' ausgebildeten Axialschlitze 64 hindurch ein Betätigungsschlüssel einführbar ist.

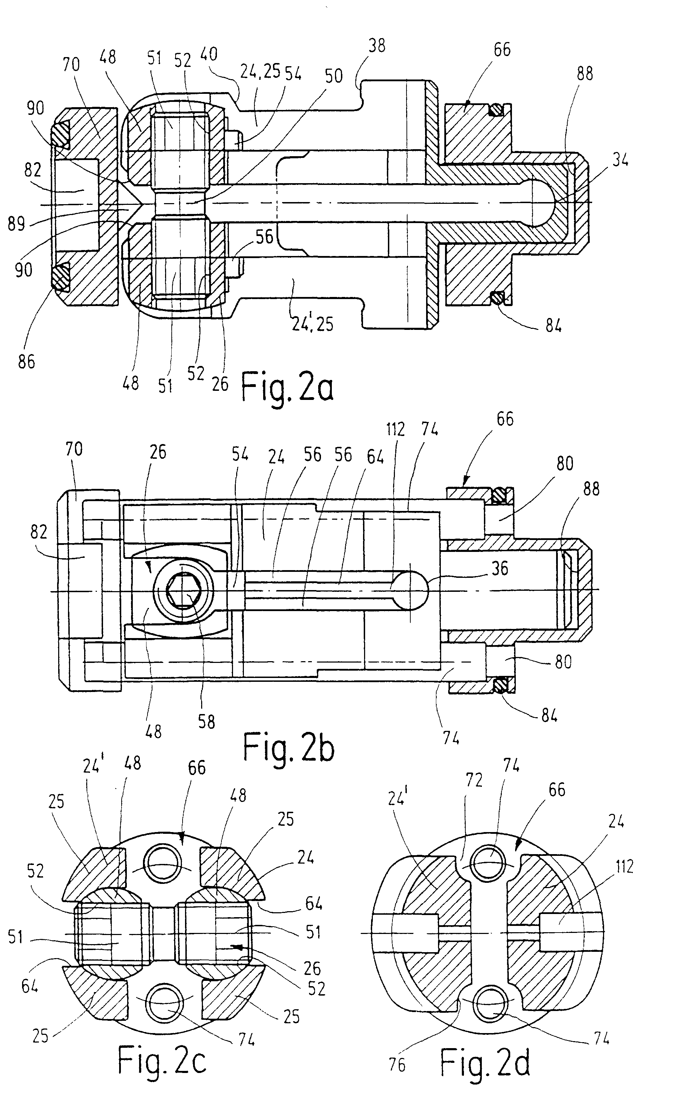

Wie aus Fig. 2a bis d zu ersehen ist, bildet der Spannmechanismus 22 zusammen mit einem Zentrierkäfig 66 eine Baueinheit. Der Zentrierkäfig 66 besteht dabei aus zwei die stirnseitigen Enden des Spanneinsatzes 32 übergreifenden kolbenartigen Zentrierelementen 68,70, die durch in axial durchgehenden Freisparungen 72 des Spanneinsatzes 32 verlaufende, als Kühlmittelrohre 74 ausgebildete Stege starr miteinander verbunden sind und in je eine achszentrale, zylindrische Ausnehmung 76,78 im Bodenbereich des Spannschafts 12 und des Hohlschafts 14 mit axialem Spiel unter Freilassung eines axialen Freiraums 77 eingreifen. Die Zentrierelemente 68,70 weisen mit den an ihren Enden in die Einsteckbohrungen 79,81 eingreifenden und dort eingelöteten oder eingeklebten Kühlmittelrohren 74 kommunizierende Zulauföffnungen 80 und Auslauföffnungen 82 auf.

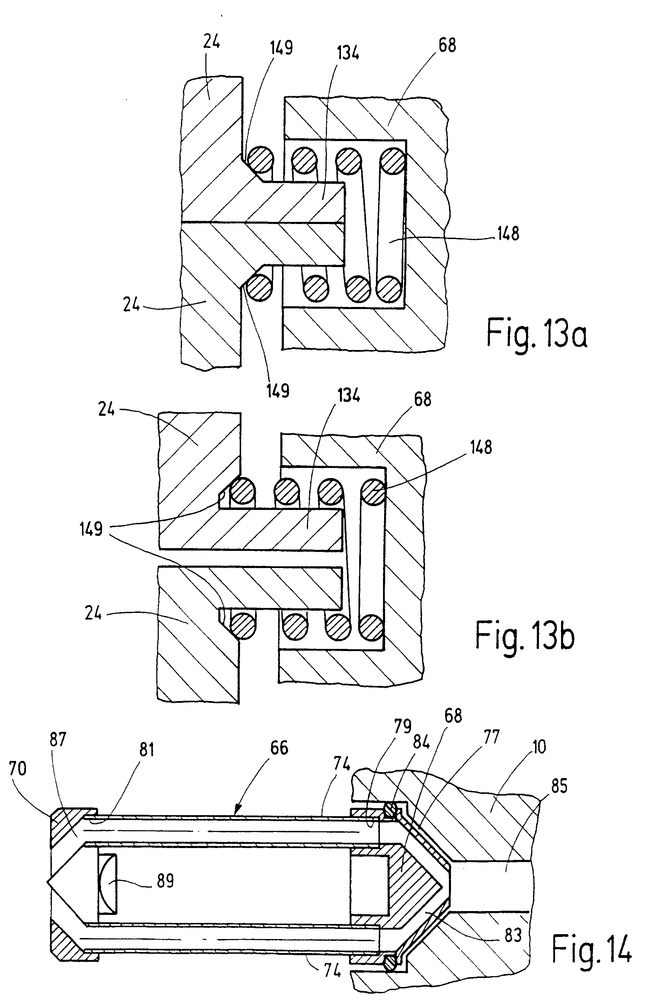

Bei dem in Fig. 14 gezeigten Ausführungsbeispiel weisen die Zentrierelemente 68,70 im Unterschied zu den anderen Ausführungsbeispielen schräg verlaufende Zulaufkanäle 83 auf, über die die Zulauföffnungen 80 der Kühlmittelrohre 74 mit einem Zentralkanal 85 des Spannschafts verbunden ist. Dadurch werden Prallkanten vermieden, die zu einer unerwünschten Entmischung des Kühlmittelfluids führen könnten. Aus dem gleichen Grund sind auf der Auslaufseite die Auslauföffnungen 82 über schräge Auslaufkanäle 87 mit dem hohlschaftseitigen Zentralkanal 89 verbunden. Diese Bauweise ist vor allem für die Minimalmengenschmierung von Vorteil, bei der ein ölhaltiges Aerosol als Kühlmittelfluid verwendet wird.

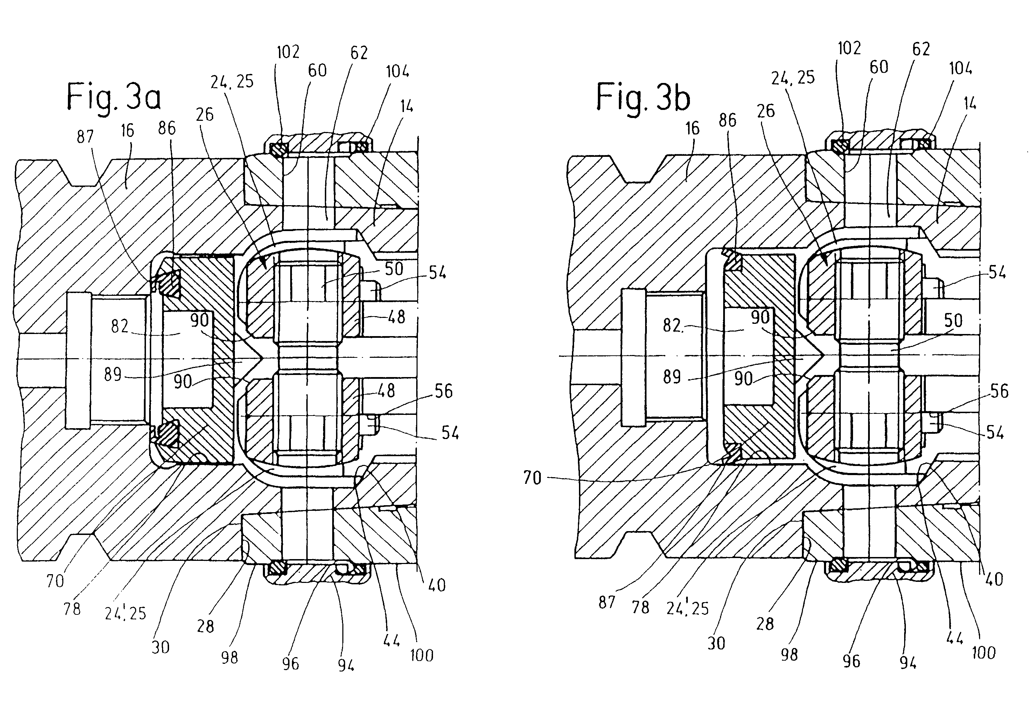

Das spannschaftseitige Zentrierelement 68 ist mit einer Radialdichtung 84 innerhalb der zugehörigen zylindrischen Ausnehmung 76 druckdicht abgedichtet, während das hohlschaftseitige Zentrierelement 70 mit einer die Auslauföffnung 62 ringförmig umgebenden Dichtung 86 innerhalb der zugehörigen zylindrischen Ausnehmung 78 abdichtbar ist. Bei dem in Fig. 1a bis c sowie 2a und b gezeigten Ausführungsbeispiel ist die Dichtung 86 als Axialdichtung ausgebildet. Wie aus Fig. 3a und b zu ersehen ist, kann die Dichtung 86 auch als Lippendichtung ausgebildet sein, deren Dichtlippe 87 unter der Einwirkung des Kühlmitteldrucks gegen eine bodenseitige Planfläche (Fig. 3a) oder gegen die Mantelfläche (Fig. 3b) der hohlschaftseitigen Ausnehmung 78 anpreßbar ist.

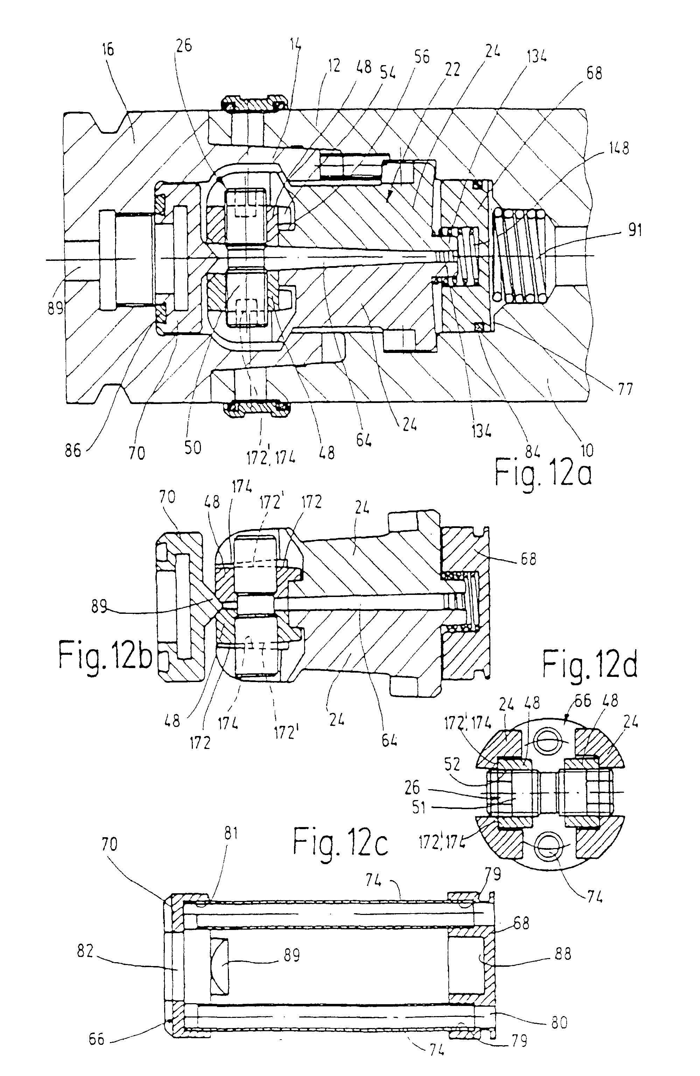

Das spannschaftseitige Zentrierelement 68 weist außerdem eine achszentrale Tasche 88 zur axial und radial schwimmenden Aufnahme der über den Spanneinsatz 32 überstehenden, das Biegegelenk 34 bildenden Federschlaufe auf. Dadurch kann der Zentrierkäfig 66 axial gegenüber dem Spanneinsatz 62 verschoben werden. Diese Verschiebemöglichkeit kann zum Auswerfen des Werkzeugkopfs 16 beim Lösevorgang genutzt werden, wenn die Druckstücke 48 an ihren einander zugewandten Seiten einen Spalt begrenzen, in den ein am hohlschaftseitigen Zentrierelement 70 überstehender Auswurfkeil 89 eingreift. Beim Lösevorgang wird der Zentrierkäfig 66 über den Auswurfkeil 89 unter der Einwirkung der Druckstücke 48 mit einer axialen Kraft beaufschlagt, die aufgrund der Verschiebbarkeit des Zentrierkäfigs 66 zum Auswurf des Werkzeugkopfs 16 führt. Zur Verbesserung der Kraftumsetzung sind die zum Auswurfkeil 89 weisenden Spaltränder 90 der Druckstücke keilförmig angefast. Das spannschaftseitige Zentrierelement 68 sorgt aufgrund seiner Kolbenwirkung in der zylindrischen Ausnehmung 76 außerdem dafür, daß der Zentrierkäfig 66 bei Druckbeaufschlagung über die Kühlmittelzuleitung 92 in Richtung Werkzeugkopf 16 verschoben wird, so daß der Spaltbereich zwischen dem Zentrierelement 70 und der zylindrischen Ausnehmung 78 über die Dichtung 86 gegen Flüssigkeitsaustritt abgedichtet wird. Eine weitere Verbesserung in dieser Hinsicht kann dadurch erzielt werden, daß in der zylindrischen Ausnehmung 76 des Spannschafts ein als Schraubendruckfeder ausgebildetes Federorgan 91 angeordnet ist, das zwischen dem Spannschaft 10 und dem spannschaftseitigen Zentrierelement 68 leicht vorgespannt ist, so daß der Zentrierkäfig 66 leicht in Richtung Werkzeugkopf gedrückt wird (Fig. 12a).

Der Spannschaft 12 wird außenseitig von einem Verschlußring 94 umgriffen, der zwischen einer die Durchbrüche 60 verschließenden und freigebenden Endstellung begrenzt axial gegenüber dem Spannschaft 12 verschiebbar ist. Zu diesem Zweck weist der Spannschaft im Bereich der Durchbrüche 60 eine ringförmige Eindrehung 96 auf, an die sich über je eine Ringstufe zur Stirnseite des Spannschafts 12 hin ein Auflaufbereich 98 größeren Durchmessers und zur Wurzel des Spannschafts 12 hin ein Führungsbereich 100 größeren Durchmessers anschließt. Der Verschlußring 94 weist je einen in der ringförmigen Eindrehung 96 und im Führungsbereich 100 gegen die Außenfläche des Spannschafts anliegenden Dichtring 102,104 auf, wobei in der in Fig. 1 gezeigten Schließstellung des Verschlußrings 94 einer der Dichtringe 102,104 in eine nicht dargestellte ringförmige Rastvertiefung des Spannschafts einrastbar sein kann.

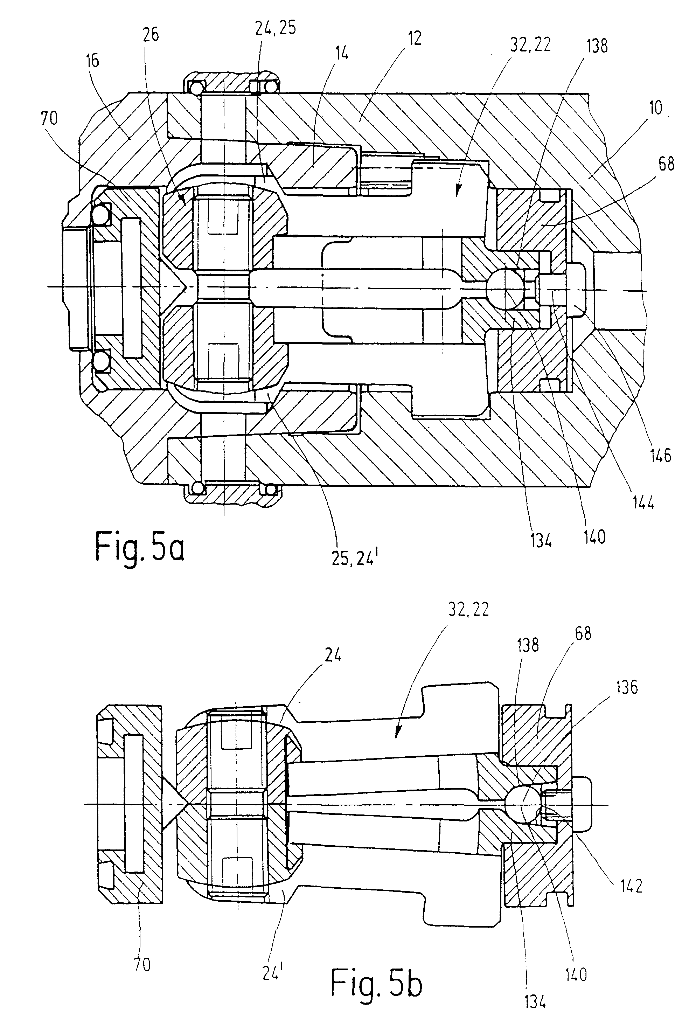

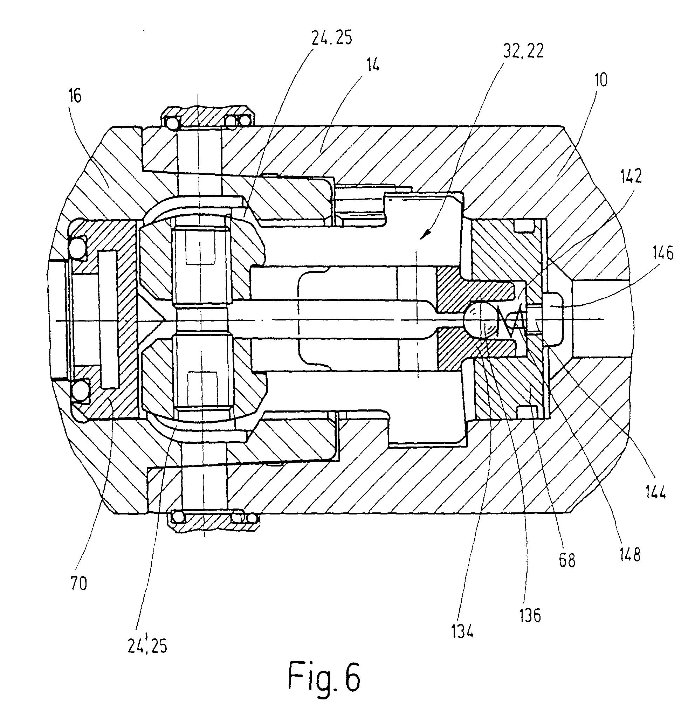

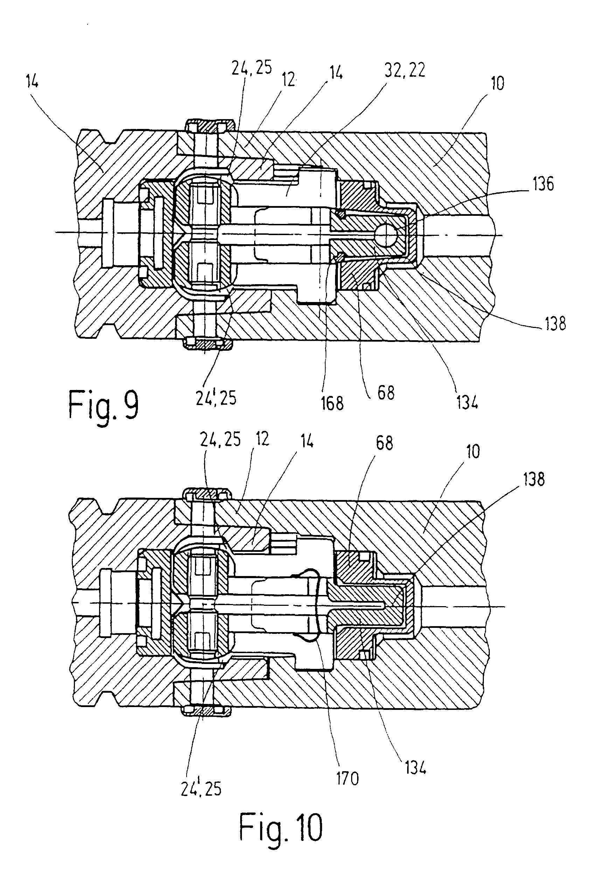

Die in den Fig. 5 bis 10 und 12 gezeigten Ausführungsbeispiele unterscheiden sich von den Ausführungsbeispielen nach Fig. 1 bis 4 dadurch, daß die betreffenden Schnittstellen einen aus zwei getrennten Spannelementen oder Spannelementpaaren 24,24' bestehenden Spanneinsatz 32 aufweisen. Die Spannelemente oder Spannelementpaare 24,24' liegen an ihren spannschaftseitigen Enden 134 entweder unmittelbar (Fig. 10) oder mittelbar (Fig. 5 bis 9) über ein rollenförmiges oder kugelförmiges Zwischenglied 136 gegeneinander so an, daß sie über den Betätigungsmechanismus 26 um eine durch die Anlagestelle 138 gebildete Kippachse 140 gegeneinander verschwenkbar sind. Die spannschaftseitigen Enden 134 der Spannelemente oder Spannelementpaare 24,24' können dabei im Bereich der Anlagestelle außen- und/oder innenseitig ballig ausgebildet sein, so daß sie leichter gegeneinander oder gegen die benachbarte spannschaftseitige Wand abrollen können. Durch das rollen- oder kugelförmige Zwischenglied 136 kann dieser Abrollvorgang verbessert werden. Die axial überstehenden spannschaftseitigen Enden 134 bilden bei den Ausführungsbeispielen nach Fig. 5, 6 und 9 eine achszentral angeordnete Aufnahme 142 für das rollen- oder kugelförmige Zwischenelement, wobei bei den Ausführungsbeispielen nach Fig. 5 und 6 zusätzlich ein durch eine zentrale Gewindebohrung des spannschaftseitigen Zentrierelements 68 mit seinem Schaft 144 in die Aufnahme 142 eingreifendes Schraubelement 146 vorgesehen ist, das den axialen Verschiebeweg des Zentrierkäfigs 66 relativ zum Spanneinsatz 32 begrenzt. Wie aus Fig. 12a bis d zu ersehen ist, kann der vorstehend beschriebene Kippvorgang auch ohne Zwischenglied und ohne gegenseitige Anlage der spannschaftseitigen Enden 134 der Spannelemente 24 erzielt werden.

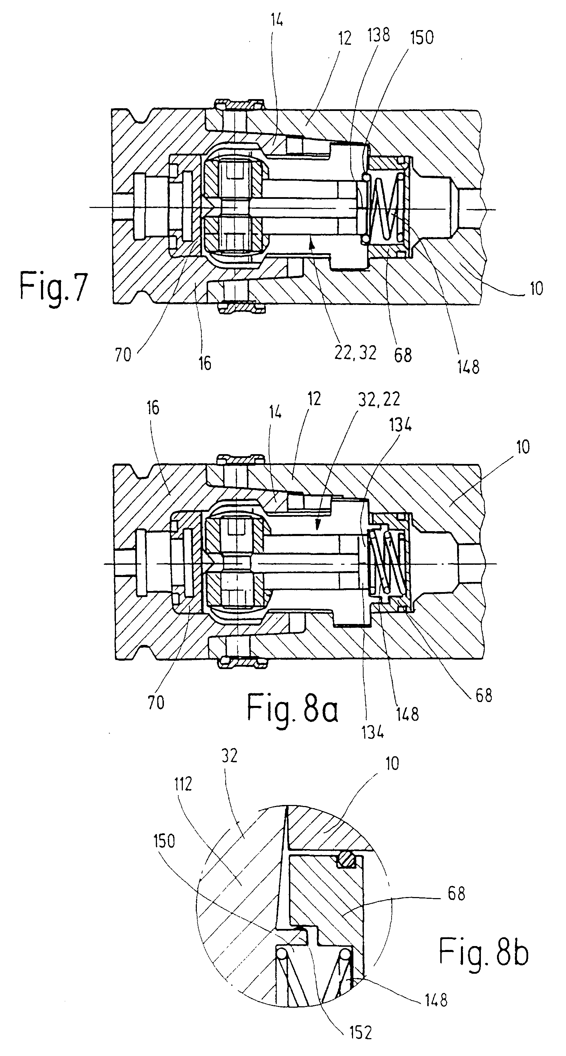

Bei den Ausführungsbeispielen nach Fig. 6 bis 8 und 12 ist zusätzlich zwischen dem Spannelement 32 und dem Zentrierkäfig 66 ein den Zentrierkäfig 66 in Richtung Spannschaft drängendes vorgespanntes Federelement 148 angeordnet, das mit seinem einen Ende beim Ausführungsbeispiel nach Fig. 6 an dem kugelförmigen Zwischenglied 136 und bei den Ausführungsbeispielen nach Fig. 7, 8 und 12 unmittelbar am spannschaftseitigen Ende 134 des Spanneinsatzes 32 und mit seinem anderen Ende am Zentrierelement abgestützt ist. Das Federelement 148 ist bei diesen Ausführungsbeispielen durchweg als Schraubendruckfeder ausgebildet. Durch die Rückstellung des Zentrierkäfigs 66 über das Federelement 148 wird das Einführen des als Hohlkegel ausgebildeten Werkzeugschafts 14 erleichtert. Die in Fig. 13a und b gezeigten Ausführungsbeispiele unterscheiden sich von den Ausführungsbeispielen nach Fig. 12a und b dadurch, daß die Spannelemente 24 des Spanneinsatzes über die Schraubendruckfeder 148 zum Zwecke des Wuchtausgleichs entweder radial nach innen oder nach außen gedrückt werden. Dies wird über die schrägen Abstützschultern 149 für die Schraubendruckfeder erreicht, die im Falle der Fig. 13a nach innen und im Falle der Fig. 13b nach außen weisen.

Bei den Ausführungsbeispielen nach Fig. 7 und 8a und b greift die Schraubendruckfeder 148 mit ihrem einen Ende in einen Axialeinstich 150 in den spannschaftseitigen Enden 134 der Spannelemente 24 ein, so daß sich auch ohne einen über das spannschaftseitige Ende 134 überstehenden Ansatz eine Zentrierung ergibt. Eine weitere Verbesserung in dieser Hinsicht wird bei dem in Fig. 8a und b gezeigten Ausführungsbeispiel erzielt, bei welchem im Bereich der spannschaftseitigen Enden 134 der Spannelemente zusätzlich eine segmentförmige Nase 152 zur Zentrierung der Spannelemente 24,24' im Bereich des spannschaftseitigen Zentrierelements 68 liegt.

Bei dem in Fig. 9 gezeigten Ausführungsbeispiel sind die Spannelemente 24,24' im Bereich der Wurzel der spannschaftseitigen Enden 134 durch einen Federring 168 zusammengehalten. In der Spannstellung weisen die spannschaftseitigen Enden 134 eine konische und in der Lösestellung eine zylindrische Außenfläche auf. Letzteres ist auch bei dem Ausführungsbeispiel nach Fig. 12a bis c der Fall.

Im Falle der Fig. 10 ist im Abstand von den spannschaftseitigen Enden 134 eine die Spannelemente 24 miteinander verbindende Federklammer 170 vorgesehen.

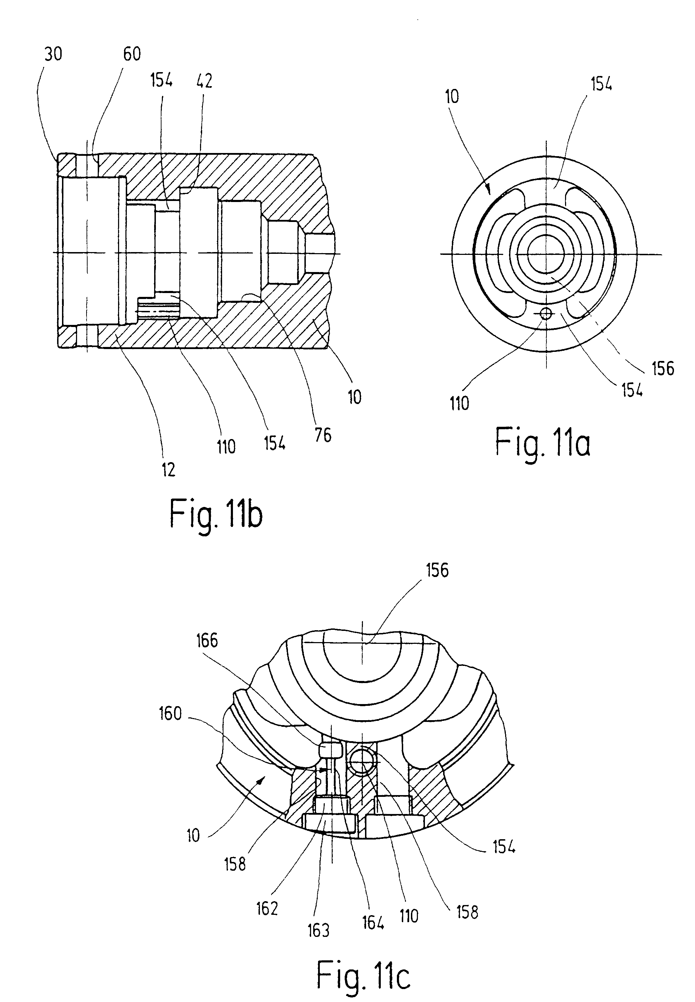

Aus den Fig. 11a bis c ist zu ersehen, daß der Spannschaft im unteren Bereich der konischen Aufnahme 18 mindestens einen Mitnehmer 154 aufweist, der in eine Nut am freien Ende des in den betreffenden Figuren nicht dargestellten Hohlschafts eingreift. Der Mitnehmer 154 sorgt für einen Formschluß zwischen dem Spannschaft 12 und dem Hohlschaft 14, so daß das mit dem Hohlschaft 14 verbundene Werkzeug immer eine definierte Ausrichtung in Umfangsrichtung gegenüber dem Spannschaft 12 aufweist. Um das zum Fügen des Hohlschafts 14 erforderliche Spiel zwischen dem Mitnehmer 154 und der Nut in der Belastungsrichtung gezielt einseitig zu beseitigen, sind in der Wandung des Spannschafts 12 zwei zu einer Axialebene 156 spiegelbildlich versetzt angeordnete, zur Axialebene parallele Bohrungen 158 vorgesehen, die den Mitnehmer 154 innenseitig anschneiden. Je nach links- oder rechtsdrehendem Werkzeug wird in eine der beiden Bohrungen 158 ein Biegebolzen 160 eingesetzt, der einen Gewindeabschnitt 162 mit Senkkopf 163, einen Biegeabschnitt 164 und einen hammerartig verdickten Mitnehmerabschnitt 166 aufweist. Der Mitnehmerabschnitt 166 drückt unter der Einwirkung einer durch eine Durchbiegung des Biegeabschnitts 164 erzeugten Federkraft gegen eine Flanke der Nut an und sorgt dafür, daß das Spiel des Mitnehmers 154 in der hohlschaftseitigen Nut in der betreffenden Bearbeitungsrichtung eliminiert ist. Zur Vermeidung von Schmutzeintritt und Kühlmittelaustritt wird die jeweils zweite Bohrung durch einen nicht dargestellten Deckel verschlossen.

Bei dem in Fig. 12a bis d gezeigten Ausführungsbeispiel sind die Spannelemente 24 an ihrem hohlschaftseitigen Kopfteil zwar mit einer Ausnehmung 46 zur Aufnahme der Druckstücke 48 versehen, aber ansonsten nicht zweigeteilt. Die Spannelemente 24 bilden hier also keine Spannelementpaare im Sinne der Fig. 1a bis c. Die Spannelemente 24 sind so dimensioniert, daß sie in den vorgefertigten Zentrierkäfig eingesteckt und aus diesem entnommen werden können. Die Druckfläche 172 der Druckstücke 48 ist hierbei teilzylindrisch gekrümmt, so daß sie beim Spannvorgang auf der benachbarten Anschlagfläche 174 des Spannelements 24 abrollen kann. In ihrem mittleren Bereich weist die Druckfläche 172 eine Scheitelfläche 172' auf, mit der sie im Spannzustand gegen die ebene Anschlagfläche 174 flächig anliegt. Um Verkantungen in diesem Bereich zu vermeiden, weisen die Innengewinde 52 der Druckstücke und die Gewindepartien 51 des Schraubelements 50 ein den Toleranzausgleich zulassendes Spiel auf. In dem in Fig. 12a gezeigten Spannzustand befinden sich die Anlagestellen zwischen Druckfläche 172 und Anschlagfläche 174 in unmittelbarer Achsnähe des Schraubelements 50. Die spannschaftseitigen Enden 134 der Spannelemente 24 greifen im montierten Zustand in die Tasche 88 des schaftseitigen Zentrierelements 68 ein und werden dort von der Druckfeder 148 umgriffen.

Zusammenfassend ist folgendes festzuhalten: Die Erfindung bezieht sich auf eine Vorrichtung zum Verbinden eines einen Werkzeugschaft 14 aufweisenden Werkzeugkopfs 16 mit einem eine Aufnahme für den Werkzeugschaft 14 aufweisenden Spannschaft 12 mit Hilfe eines Spannmechanismus. Der Spannmechanismus weist mindestens zwei im Winkelabstand voneinander angeordnete, in ihrer Spannstellung den vorzugsweise als Hohlschaft ausgebildeten Werkzeugschaft 14 und den Spannschaft 12 kraftschlüssig miteinander verbindende Spannelemente 25 und einen Betätigungsmechanismus 26 zur begrenzten Verstellung der Spannelemente 25 zwischen einer Lösestellung und einer Spannstellung auf, wobei die Spannelemente unter der Krafteinwirkung des Betätigungsmechanismus in ihrer Spannstellung gehalten werden. Ein funktionsgerechter und dennoch einfacher Aufbau des Spannmechanismus wird dadurch ermöglicht, daß der Spannmechanismus 22 an den stirnseitigen Enden seiner Spannelemente 25 von je einem kolbenartigen Zentrierelement 68, 70 übergriffen ist, wobei die Zentrierelemente 68, 70 durch achsparallele Stege 74 unter Bildung eines den Spannmechanismus 22 mit axialem Spiel übergreifenden Zentrierkäfigs 66 miteinander verbunden sind. Die Zentrierelemente 68, 70 greifen in je eine achszentrale, zylindrische Ausnehmung 76, 78 im Bodenbereich des Spannschafts und des Hohlschafts 14 ein.

## Patentansprüche

1. Vorrichtung zum Verbinden eines einen Werkzeugschaft (14) aufweisenden Werkzeugkopfs (16) mit einem eine Aufnahme (18) für den Werkzeugschaft (14) aufweisenden, vorzugsweise stirnseitig in einer Maschinenspindel (10) angeordneten Spannschaft (12) mit Hilfe eines Spannmechanismus (22), der mindestens zwei im Winkelabstand voneinander angeordnete, in ihrer Spannstellung den vorzugsweise als Hohlschaft ausgebildeten Werkzeugschaft (14) und den Spannschaft (12) kraftschlüssig miteinander verbindende Spannelemente (25) und einen Betätigungsmechanismus (26) zur begrenzten Verstellung der Spannelemente (25) zwischen einer Lösestellung und einer Spannstellung aufweist, **dadurch gekennzeichnet, daß** der Spannmechanismus (22) an den stirnseitigen Enden seiner Spannelemente (25) von je einem kolbenartigen Zentrierelement (68,70) übergriffen ist und daß die Zentrierelemente (68,70) durch achsparallele Stege (74) unter Bildung eines den Spannmechanismus (22) mit axialem Spiel übergreifenden Zentrierkäfigs (66) starr miteinander verbunden sind und in je eine achszentrale, vorzugsweise zylindrische Ausnehmung (76,78) im Bodenbereich des Spannschafts und des Hohlschafts (14) unter Freilassung eines axialen Freiraums (77) eingreifen.

2. Vorrichtung nach Anspruch 1, **dadurch gekennzeichnet, daß** der Zentrierkäfig (66) an seinem spannschaftseitigen Zentrierelement (68) in Richtung Werkzeugschaft (14) mit einem Fluiddruck beaufschlagbar ist.

3. Vorrichtung nach Anspruch 1 oder 2, **dadurch gekennzeichnet, daß** der Zentrierkäfig (66) als unter der Einwirkung des Betätigungsmechanismus (26) beim Lösen des Spannmechanismus (22) den Werkzeugschaft (14) vom Spannschaft (12) axial trennendes Auswurfelement ausgebildet ist.

4. Vorrichtung nach einem der Ansprüche 1 bis 3, **dadurch gekennzeichnet, daß** die Stege (74) in axial durchgehenden Freisparungen (72) der Spannelemente (25) verlaufen.

5. Vorrichtung nach einem der Ansprüche 1 bis 4, **dadurch gekennzeichnet, daß** die Stege unter Bildung je eines Kühlmittelrohrs (74) hohl ausgebildet sind und daß die kolbenartigen Zentrierelemente (68,70) mit den Kühlmittelrohren (74) kommunizierende Zu- und Auslauföffnungen (80,82) aufweisen.

6. Vorrichtung nach Anspruch 5, **dadurch gekennzeichnet, daß** zumindest eines der Zentrierelemente (68,70) zwei um 180° gegeneinander versetzt angeordnete, achsparallel ausgerichtete Einsteckbohrungen (79,81) aufweist, in die die Kühlmittelrohre (74) eingesteckt und gegebenenfalls eingeklebt oder eingelötet oder eingeschweißt sind.

7. Vorrichtung nach einem der Ansprüche 1 bis 6, **dadurch gekennzeichnet, daß** das spannschaftseitige Zentrierelement (68) mindestens eine mit den Kühlmittelrohren kommunizierende achsparallel ausgerichtete Zulauföffnung (80) aufweist.

8. Vorrichtung nach Anspruch 7, **dadurch gekennzeichnet, daß** die Zulauföffnung (80) über schräge kantenfreie Zulaufkanäle (83) mit einem spannschaftseitigen Zentralkanal (85) verbunden ist.

9. Vorrichtung nach einem der Ansprüche 1 bis 8, **dadurch gekennzeichnet, daß** das spannschaftseitige Zentrierelement (68) mit einer Radialdichtung (84) innerhalb der zugehörigen Ausnehmung (76) abgedichtet ist.

10. Vorrichtung nach einem der Ansprüche 5 bis 9, **dadurch gekennzeichnet, daß** das hohlschaftseitige Zentrierelement (70) eine vorzugsweise über schräge, kantenfreie Auslaufkanäle (87) mit den Kühlmittelrohren (74) kommunizierende zentrale Auslauföffnung (82) aufweist.

11. Vorrichtung nach einem der Ansprüche 8 bis 10, **dadurch gekennzeichnet, daß** der spannschaftseitige Zentralkanal (85), die Zulaufkanäle (83), die Kühlmittelrohre (74), die Auslaufkanäle (87) und die zentrale Auslauföffnung (82) einen im wesentlichen konstanten oder abschnittsweise stetig zu- oder abnehmenden Strömungsquerschnitt aufweisen.

12. Vorrichtung nach einem der Ansprüche 5 bis 11, **dadurch gekennzeichnet, daß** das hohlschaftseitige Zentrierelement (70) mit einer die Auslauföffnung (82) außenseitig umgebenden Dichtung (86) innerhalb der zugehörigen Ausnehmung (78) abdichtbar ist.

13. Vorrichtung nach Anspruch 12, **dadurch gekennzeichnet, daß** die Dichtung (86) als Axialdichtung ausgebildet ist.

14. Vorrichtung nach Anspruch 13, **dadurch gekennzeichnet, daß** die Dichtung (86) als Lippendichtung ausgebildet ist, deren Dichtlippe (87) unter der Einwirkung des Kühlmitteldrucks gegen eine Bodenfläche oder eine Mantelfläche der hohlschaftseitigen Ausnehmung (78) anpreßbar ist.

15. Vorrichtung nach einem der Ansprüche 1 bis 14, **dadurch gekennzeichnet, daß** die Spannelemente (25) des Spanneinsatzes (32) lösbar in den Zentrierkäfig (66) eingesetzt sind.

16. Vorrichtung nach einem der Ansprüche 1 bis 15, **dadurch gekennzeichnet, daß** zwischen dem Spanneinsatz (32) und dem Zentrierkäfig (66) ein den Zentrierkäfig in Richtung Spannschaft (66) vorspannendes Federelement (148) angeordnet ist.

17. Vorrichtung nach Anspruch 16, **dadurch gekennzeichnet, daß** das Federelement (148) zugleich als Zentrierorgan für den Spanneinsatz (32) ausgebildet ist.

18. Vorrichtung nach Anspruch 16 oder 17, **dadurch gekennzeichnet, daß** das Federelement (148) als Schraubendruckfeder ausgebildet ist, die mit ihrem einen Ende in spannschaftseitig angeordnete Teilkreisausnehmungen (150) der Spannelemente (24,24') eingreift und mit ihrem anderen Ende am spannschaftseitigen Zentrierelement (68) abgestützt ist.

19. Vorrichtung nach einem der Ansprüche 16 bis 18, **dadurch gekennzeichnet, daß** die Spannelemente (24) des Spanneinsatzes über das Federelement (148) radial nach außen oder nach innen gedrückt werden.

20. Vorrichtung nach Anspruch 19, **dadurch gekennzeichnet, daß** die Spannelemente (24) je eine einseitig nach außen oder nach innen weisende schräge Abstützschulter (149) für das Federelement (148) aufweisen.

21. Vorrichtung nach Anspruch 16 oder 17, **dadurch gekennzeichnet, daß** das Federelement (148) als Druckfeder ausgebildet ist, die mit ihrem einen Ende an einem Zwischenglied (136) und am anderen Ende am spannschaftseitigen Zentrierelement (68) abgestützt ist.

22. Vorrichtung nach einem der Ansprüche 16 bis 21, **dadurch gekennzeichnet, daß** die axial überstehenden, spannschaftseitigen Enden (134) der Spannelemente (24,24') eine achszentrale Aufnahme (142) für ein als Rolle oder Kugel ausgebildetes Zwischenglied (136) bilden.

23. Vorrichtung nach einem der Ansprüche 1 bis 22, **dadurch gekennzeichnet, daß** zwischen dem Spannschaft (12) und dem Zentrierkäfig (66) ein den Zentrierkäfig leicht in Richtung Werkzeugkopf (16) drükkendes Federorgan (91) angeordnet ist.

24. Vorrichtung nach Anspruch 23, **dadurch gekennzeichnet, daß** das Federorgan (91) als zwischen Spannschaft (16) und spannschaftseitigem Zentrierelement (68) leicht vorgespannte Schraubendruckfeder ausgebildet ist.

25. Vorrichtung nach einem der Ansprüche 1 bis 24, **dadurch gekennzeichnet, daß** die Spannelemente (25) unter der Krafteinwirkung des Betätigungsmechanismus (26) in ihrer Spannstellung gehalten werden, und daß die Spannelemente (25) in Spannrichtung des Betätigungsmechanismus (26) zusätzlich mit einer Federkraft beaufschlagbar sind.

26. Vorrichtung nach Anspruch 25, **dadurch gekennzeichnet, daß** die Spannelemente (25) in ihrer Lösestellung unter der Einwirkung der Federkraft in Spannrichtung vorgespannt sind.

27. Vorrichtung nach Anspruch 25 oder 26, **dadurch gekennzeichnet, daß** die Federkraft in Spannrichtung abnimmt.

28. Vorrichtung nach Anspruch 27, **dadurch gekennzeichnet, daß** die Spannelemente (25) in ihrer Spannstellung bezüglich der Federkraft im wesentlichen vorspannungsfrei sind.

29. Vorrichtung nach einem der Ansprüche 1 bis 28, **dadurch gekennzeichnet, daß** zwei in Spannrichtung einander gegenüberliegende Spannelemente oder Spannelementpaare (24,24') über ein in der Lösestellung des Betätigungsmechanismus (26) in Spannrichtung vorgespanntes Federelement (Biegegelenk 34) vorzugsweise einstückig miteinander verbunden sind.

30. Vorrichtung nach Anspruch 29, **dadurch gekennzeichnet, daß** das Federelement (Biegegelenk 34) in der Spannstellung des Betätigungsmechanismus (26) ganz oder nahezu entspannt ist.

31. Vorrichtung nach einem der Ansprüche 1 bis 30, **dadurch gekennzeichnet, daß** zwei einander radial gegenüberliegende Spannelemente oder Spannelementpaare (24,24') an ihrem spannschaftseitigen Ende unter Bildung eines einstückigen Spanneinsatzes (32) über ein Biegegelenk (34) einstückig miteinander verbunden und über den Betätigungsmechanismus (26) um die Biegeachse des Biegegelenks (34) radial gegeneinander verbiegbar sind.

32. Vorrichtung nach Anspruch 31, **dadurch gekennzeichnet, daß** das Biegegelenk (34) des Spanneinsatzes (32) die Gestalt einer über die spannschaftseitigen Enden der Spannelemente oder Spannelementpaare (24,24') axial überstehenden, U-förmigen Federschlaufe aufweist.

33. Vorrichtung nach Anspruch 31 oder 32, **dadurch gekennzeichnet, daß** die Spannelementpaare (24,24') an ihren spannschaftseitigen Enden paarweise über ein quer zum Biegegelenk (34) ausgerichtetes zweites Biegegelenk (36) einstückig miteinander verbundene und um deren Biegeachse (36) mit Hilfe des Betätigungsmechanismus (26) gegeneinander verbiegbare Spannelemente (25) aufweisen.

34. Vorrichtung nach einem der Ansprüche 31 bis 33, **dadurch gekennzeichnet, daß** zumindest das erste Biegegelenk (34) in der Spannstellung der Spannelemente (25) vorspannungsfrei und in der Lösestellung federelastisch vorgespannt ist.

35. Vorrichtung nach einem der Ansprüche 1 bis 30, **dadurch gekennzeichnet, daß** zwei einander radial gegenüberliegende Spannelemente oder Spannelementpaare (24,24') als getrennte Teile ausgebildet sind, die unter Bildung eines Spanneinsatzes (32) an ihren spannschaftseitigen Enden (134) oder in axialem Abstand von diesen unmittelbar oder mittelbar über ein Zwischenglied (136) gegeneinander anliegen und über den Betätigungsmechanismus (26) um eine durch die Anlagestelle (138) gebildete Kippachse (140) gegeneinander verschwenkbar sind.

36. Vorrichtung nach Anspruch 35, **dadurch gekennzeichnet, daß** die Spannelementpaare (24,24') an ihren spannschaftseitigen Enden (134) paarweise über ein quer zur Kippachse (140) ausgerichtetes Biegegelenk (36) einstückig miteinander verbundene und um deren Biegeachse mit Hilfe des Betätigungsmechanismus (26) gegeneinander verbiegbare Spannelemente (25) aufweisen.

37. Vorrichtung nach Anspruch 35 oder 36, **dadurch gekennzeichnet, daß** die spannschaftseitigen Enden der Spannelemente oder Spannelementpaare (24,24') im Bereich der Anlagestelle (138) außen- und/oder innenseitig ballig ausgebildet sind.

38. Vorrichtung nach einem der Ansprüche 35 bis 37, **dadurch gekennzeichnet, daß** das Zwischenglied (136) als lose zwischen den spannschaftseitigen Enden eingelegte Rolle oder Kugel ausgebildet ist.

39. Vorrichtung nach einem der Ansprüche 34 bis 38, **dadurch gekennzeichnet, daß** die spannschaftseitigen Enden (134) über eine Feder, vorzugsweise über einen Federring (168) oder eine Federklammer (170) zusammengehalten sind.

40. Vorrichtung nach einem der Ansprüche 1 bis 39, **dadurch gekennzeichnet, daß** der Betätigungsmechanismus (26) zwei in je eine stirnseitig sowie radial nach innen offene Ausnehmung (46) der einander radial gegenüberliegenden Spannelemente oder Spannelementpaare (24,24') einsetzbare Druckstücke sowie mindestens ein Schraubelement (50) zur Verstellung des Abstands zwischen den Druckstücken (48) aufweist.

41. Vorrichtung nach Anspruch 40, **dadurch gekennzeichnet, daß** das Schraubelement (50) als Differentialschraube ausgebildet ist, die mit ihren Gewindepartien (51) in miteinander fluchtende, radial ausgerichtete gegenläufige Innengewinde (52) der Druckstücke (48) eingreift.

42. Vorrichtung nach Anspruch 40 oder 41, **dadurch gekennzeichnet, daß** die Druckstücke (48) über ein vorzugsweise als Federschlaufe ausgebildetes Biegegelenk (49) einstückig miteinander verbunden sind.

43. Vorrichtung nach einem der Ansprüche 40 bis 42, **dadurch gekennzeichnet, daß** das Schraubelement (50) als durch ein Innengewinde (52) eines der Druckstücke (48) hindurchgreifender und mit seiner Stirnfläche gegen ein Widerlager (53) des anderen Druckstücks (48) anliegender Gewindebolzen ausgebildet ist.

44. Vorrichtung nach Anspruch 43, **dadurch gekennzeichnet, daß** durch ein Innengewinde (52) des anderen Druckstücks (48) ein zweiter Gewindebolzen hindurchgreift, dessen Stirnfläche das Widerlager (53) für den ersten Gewindebolzen bildet.

45. Vorrichtung nach einem der Ansprüche 40 bis 44, **dadurch gekennzeichnet, daß** die Druckstücke (48) ein zum benachbarten Spannelementpaar (24,24') hin balliges oder keilförmiges Profil aufweisen.

46. Vorrichtung nach Anspruch 45, **dadurch gekennzeichnet, daß** das ballige oder keilförmige Profil der Druckstücke (48) in eine in Zustellrichtung flachere Zustellschräge und eine an diese anschließende steilere Spannschräge unterteilt ist.

47. Vorrichtung nach einem der Ansprüche 40 bis 44, **dadurch gekennzeichnet, daß** die Druckstücke (48) eine zum benachbarten Spannelement (24) hin teilzylindrische, auf dessen Anlagefläche (174) beim Spannvorgang abrollende Druckfläche (172) aufweisen.

48. Vorrichtung nach Anspruch 47, **dadurch gekennzeichnet, daß** die Spannelemente (24) eine dem jeweiligen Druckstück (48) zugewandte, vorzugsweise ebene Anlagefläche (174) aufweisen und daß die Druckflächen (172) der Druckstücke (48) eine in der Spannstellung der Druckstücke gegen die Anlagefläche (174) flächig anliegende Scheitelfläche (172') aufweisen.

49. Vorrichtung nach einem der Ansprüche 40 bis 48, **dadurch gekennzeichnet, daß** die Innengewinde (52) der Druckstücke (48) und die Gewindepartien (51) des Schraubelements (50) ein den Toleranzausgleich zulassendes Spiel aufweisen.

50. Vorrichtung nach einem der Ansprüche 1 bis 49, **dadurch gekennzeichnet, daß** die Spannelemente (25) und/oder die Druckstücke (48) eine verschleißfeste und/oder reibungsmindernde Oberflächenbeschichtung tragen, oder oberflächengehärtet sind.

51. Vorrichtung nach einem der Ansprüche 33 bis 50, **dadurch gekennzeichnet, daß** die Spannelemente (25) eines jeden Spannelementpaars (24,24') durch einen vorzugsweise bis zum betreffenden Biegegelenk (36) durchgehenden Axialspalt (64) voneinander getrennt sind.

52. Vorrichtung nach Anspruch 51, **dadurch gekennzeichnet, daß** das Schraubelement (50) mindestens einen durch einen der Axialspalte (64) hindurch radial zugänglichen Eingriff (58) für ein Schraubwerkzeug aufweist.

53. Vorrichtung nach einem der Ansprüche 1 bis 52, **dadurch gekennzeichnet, daß** der Spannschaft (12) und der Hohlschaft (14) miteinander fluchtende Durchbrüche (60,62) für den Durchgriff zum Betätigungsmechanismus mittels eines Schraubwerkzeugs aufweisen.

54. Vorrichtung nach einem der Ansprüche 40 bis 53, **dadurch gekennzeichnet, daß** die Druckstücke (48) je einen Mitnehmernocken (54) aufweisen, der gegen eine radial nach außen weisende Anschlagfläche (56) des zugehörigen Spannelements oder Spannelementpaares (24,24') anliegt und dieses beim Betätigen in Richtung Lösestellung mitnimmt.

55. Vorrichtung nach einem der Ansprüche 31 bis 54, **dadurch gekennzeichnet, daß** der Spanneinsatz (32) mit seinen spannschaftseitigen Spannschultern (38) bajonettartig mit dem Spannschaft (12) verriegelbar und in der Verriegelungsstellung formschlüssig gegen Verdrehen sicherbar ist.

56. Vorrichtung nach einem der Ansprüche 31 bis 55, **dadurch gekennzeichnet, daß** die spannschaftseitigen Spannflächen (42) und die zugehörigen Spannschultern (38) der Spannelemente (25) im wesentlichen in einer Radialebene ausgerichtet sind.

57. Vorrichtung nach einem der Ansprüche 31 bis 56, **dadurch gekennzeichnet, daß** die hohlschaftseitigen Spannflächen (44) und die zugehörigen Spannschultern (40) der Spannelemente (25) als gegenüber den spannschaftseitigen Spannflächen (42) und Spannschultern (38) radial nach außen divergierende Schräg- oder Konusflächen ausgebildet sind.

58. Vorrichtung nach einem der Ansprüche 31 bis 57, **dadurch gekennzeichnet, daß** die hohlschaftseitigen Spannschultern (40) der Spannelemente (25) in Umfangsrichtung durch im wesentlichen radial ausgerichtete Begrenzungskanten (39) begrenzt sind.

59. Vorrichtung nach einem der Ansprüche 31 bis 58, **dadurch gekennzeichnet, daß** die hohlschaftseitigen Spannschultern (40) der Spannelemente (25) in radialer Richtung durch eine im wesentlichen in Umfangsrichtung ausgerichtete Begrenzungskante (41) begrenzt sind.

60. Vorrichtung nach Anspruch 58 oder 59, **dadurch gekennzeichnet, daß** zumindest eine der Begrenzungskanten (39,41) konvex gerundet oder angefast ist.

61. Vorrichtung nach einem der Ansprüche 31 bis 60, **dadurch gekennzeichnet, daß** die Spannschultern (38,40) der Spannelemente (25) eines jeden Spannelementpaares (24,24') einen auf die Spannschaftachse bezogenen Zentralwinkel von 30° bis 120°, vorzugsweise 50° bis 90° miteinander einschließen.

62. Vorrichtung nach einem der Ansprüche 55 bis 61, **dadurch gekennzeichnet, daß** der Spanneinsatz (32) in seiner Verriegelungsstellung mittels eines die Spannfläche (42) des Spannschafts (12) achsparallel durchdringenden, in eine radial randoffene Ausnehmung eines der Spannelemente oder Spannelementpaare formschlüssig eingreifenden Arretierungsbolzens (110) verdrehgesichert ist.

63. Vorrichtung nach einem der Ansprüche 55 bis 62, **dadurch gekennzeichnet, daß** der Spanneinsatz (32) wahlweise um 180° verdreht in den Spannschaft (12) einsetzbar und dort verriegelbar ist.

64. Vorrichtung nach einem der Ansprüche 31 bis 63, **dadurch gekennzeichnet, daß** das spannschaftseitige Zentrierelement (68) eine achszentrale Tasche (88) zur axial und radial schwimmenden Aufnahme der das erste Biegegelenk (34) bildenden, über den Spanneinsatz (32) axial überstehenden Federschlaufe aufweist.

65. Vorrichtung nach einem der Ansprüche 35 bis 64, **dadurch gekennzeichnet, daß** das spannschaftseitige Zentrierelement (68) eine achszentrale Tasche (88) zur axial und radial schwimmenden Aufnahme der das Kippgelenk bildenden, über den Spanneinsatz (32) axial überstehenden spannschaftseitigen Enden (134) der Spannelemente (25) aufweist.

66. Vorrichtung nach Anspruch 65, **dadurch gekennzeichnet, daß** die axial überstehenden spannschaftseitigen Enden (134) der Spannelemente (24,24') sich in Spannstellung zu einer konischen, zum Spannschaft (12) verjüngenden und in der Lösestellung zu einer zylindrischen Außenfläche ergänzen.

67. Vorrichtung nach einem der Ansprüche 1 bis 66, **dadurch gekennzeichnet, daß** der Hohlschaft (14) eine sich zu seinem freien Ende kegelförmig verjüngende Außenfläche (20) und der Spannschaft (12) eine entsprechend konische Aufnahme (18) aufweist.

68. Vorrichtung nach einem der Ansprüche 1 bis 67, **dadurch gekennzeichnet, daß** der Hohlschaft von einer als Ringschulter ausgebildeten Planfläche (28) begrenzt ist, die in der Spannstellung der Spannelemente (25) gegen eine ringförmige Planfläche (30) des Spannschafts (12) anpreßbar ist.

69. Vorrichtung nach einem der Ansprüche 1 bis 68, **dadurch gekennzeichnet, daß** der als Hohlschaft ausgebildete Werkzeugschaft (14) an seinem freien Ende mindestens eine Nut für den Eingriff eines spannschaftseitigen Mitnehmers (154) aufweist und daß der Spannschaft (12) mindestens eine seitlich gegen eine Axialebene (156) versetzte Bohrung (158) zur Aufnahme eines in die Nut oder in eine Ausnehmung des Hohlschafts eingreifenden, und dabei eine gezielte Spielfreisetzung vorzugsweise in Umfangsrichtung bewirkenden biegeelastisch ausgebildeten Biegebolzens (160) aufweist.

70. Vorrichtung nach Anspruch 69, **dadurch gekennzeichnet, daß** die Bohrung (158) als Gewindebohrung zur Aufnahme des ein entsprechendes Gewinde aufweisenden Biegebolzens (160) aufweist.

71. Vorrichtung nach Anspruch 70, **dadurch gekennzeichnet, daß** der Biegebolzen (160) einen Gewindeabschnitt (162), einen Biegeabschnitt (164) und einen am freien Ende des Biegeabschnitts hammerartig verdickten Mitnehmerabschnitt (166) aufweist.

72. Vorrichtung nach einem der Ansprüche 69 bis 71, **dadurch gekennzeichnet, daß** zwei zur Axialebene (156) spiegelsymmetrisch angeordnete Bohrungen (158) zur wahlweisen Aufnahme eines Biegebolzens (160) vorgesehen sind.

73. Vorrichtung nach einem der Ansprüche 40 bis 72, **dadurch gekennzeichnet, daß** die Druckstücke (48) an ihren einander zugewandten Seiten einen Spalt begrenzen, in den ein auf der Hohlschaftseite, vorzugsweise am hohlschaftseitigen Zentrierelement (70) überstehender, unter der Einwirkung der Druckstücke (48) mit einer axialen Kraft beaufschlagbarer Auswurfkeil (89) eingreift.

74. Vorrichtung nach Anspruch 73, **dadurch gekennzeichnet, daß** die zum Auswurfkeil (89) weisenden Spaltränder (90) der Druckstücke (48) keilförmig angefast sind.

75. Vorrichtung nach einem der Ansprüche 53 bis 74, **gekennzeichnet durch** einen den Spannschaft (12) außenseitig umgreifenden, an seinen beiden Rändern gegenüber dem Spannschaft abdichtbaren Verschlußring (94), der zwischen je einer die Durchbrüche (60) verschließenden und freigebenden Endstellung begrenzt axial gegenüber dem Spannschaft (12) verschiebbar ist.

76. Vorrichtung nach Anspruch 75, **dadurch gekennzeichnet, daß** der Spannschaft (12) im Bereich der Durchbrüche (60) eine ringförmige Eindrehung (96) aufweist, an die sich über je eine Ringstufe zur Stirnseite des Spannschafts (12) hin ein Auflaufbereich (98) größeren Durchmessers und zur Wurzel des Spannschafts hin ein Führungsbereich (100) größeren Durchmessers anschließt, und daß der Verschlußring (94) je einen in der ringförmigen Eindrehung (96) und im Führungsbereich (100) gegen die Außenfläche des Spannschafts (12) anliegenden Dichtring aufweist.

77. Vorrichtung nach Anspruch 76, **dadurch gekennzeichnet, daß** in der Schließstellung des Verschlußrings (94) mindestens einer der Dichtringe (102,104) in eine ringförmige Rastvertiefung des Spannschafts (12) einrastbar ist.

## Claims

1. A device for connecting a tool head (16), which has a tool shank (14), to a clamping shank (12), which has a seat (18) for the tool shank (14) and is preferably arranged at the end side in a machine spindle (10), with the aid of a clamping mechanism (22) which has at least two clamping elements (25), which are arranged at an angular distance from one another and, in their clamping position, connect the tool shank (14), which is preferably designed as a hollow shank, and the clamping shank (12) to one another in a force-fitting manner, and an actuating mechanism (26) for the limited displacement of the clamping elements (25) between a release position and a clamping position, wherein in each case one piston-like centering element (68, 70) engages over the clamping mechanism (22) at the end-side ends of its clamping elements (25), and wherein the centering elements (68, 70) are rigidly connected to one another by means of axially parallel webs (74), so as to form a centering cage (66) which engages over the clamping mechanism (22) with axial play, and in each case engage in one axially central, preferably cylindrical recess (76, 78) in the region of the base of the clamping shank and the hollow shank (14), leaving clear an axial space (77).

2. The device as claimed in claim 1, wherein a fluid pressure can be applied to the centering cage (66) at its centering element (68) on the clamping shank side, in the direction of the tool shank (14).

3. The device as claimed in claim 1 or 2, wherein the centering cage (66) is designed as an ejector element which, under the action of the actuating mechanism (26) when the clamping mechanism (22) is being released, separates the tool shank (14) from the clamping shank (12) in the axial direction.

4. The device as claimed in one of claims 1 to 3, wherein the webs (74) run in axially continuous cutouts (72) in the clamping elements (25).

5. The device as claimed in one of claims 1 to 4, wherein the webs are of hollow design, so as to form in each case one coolant pipe (74), and wherein the piston-like centering elements (68, 70) have inlet and outlet openings (80, 82) which are in communication with the coolant pipes (74).

6. The device as claimed in claim 5, wherein at least one of the centering elements (68, 70) has two receiving bores (79, 81), which are arranged offset through 180° with respect to one another, are aligned axially parallel and into which the coolant pipes (74) are fitted and, if appropriate, adhesively bonded or soldered or welded.

7. The device as claimed in one of claims 1 to 6, wherein the centering element (68) on the clamping shank side has at least one inlet opening (80) which is in communication with the coolant pipes and is aligned axially parallel.

8. The device as claimed in claim 7, wherein the inlet opening (80) is connected to a central passage (85) on the clamping shank side via inclined, edgeless inlet passages (83).

9. The device as claimed in one of claims 1 to 8, wherein the centering element (68) on the clamping shank side is sealed by means of a radial seal (84) inside the associated recess (76).

10. The device as claimed in one of claims 5 to 9, wherein the centering element (70) on the hollow shank side has a central outlet opening (82) which is preferably in communication with the coolant pipes (74) via inclined, edgeless outlet passages (87).

11. The device as claimed in one of claims 8 to 10, wherein the central passage (85) on the clamping shank side, the inlet passages (83), the coolant pipes (74), the outlet passages (87) and the central outlet opening (82) have a cross section of flow which is substantially constant or, in sections, increases or decreases continuously.

12. The device as claimed in one of claims 5 to 11, wherein the centering element (70) on the hollow shank side can be sealed inside the associated recess (78) by a seal (86) which surrounds the outlet opening (82) on the outside.

13. The device as claimed in claim 12, wherein the seal (86) is designed as an axial seal.

14. The device as claimed in claim 13, wherein the seal (86) is designed as a lip seal, the sealing lip (87) of which can be pressed against a base surface or a lateral surface of the recess (78) on the hollow shank side under the action of the coolant pressure.

15. The device as claimed in one of claims 1 to 14, wherein the clamping elements (25) of the clamping insert (32) are fitted releasably into the centering cage (66).

16. The device as claimed in one of claims 1 to 15, wherein a spring element (148) which preloads the centering cage in the direction of the clamping shank (66) is arranged between the clamping insert (32) and the centering cage (66).

17. The device as claimed in claim 16, wherein the spring element (148) is at the same time designed as a centering member for the clamping insert (32).

18. The device as claimed in claim 16 or 17, wherein the spring element (148) is designed as a helical compression spring, one end of which engages in pitch-circle recesses (150), arranged on the clamping shank side, in the clamping elements (24, 24'), and the other end of which is supported on the centering element (68) on the clamping shank side.

19. The device as claimed in one of claims 16 to 18, wherein the clamping elements (24) of the clamping insert are pressed radially outward or inward via the spring element (148).

20. The device as claimed in claim 19, wherein the clamping elements (24) each have an inclined support shoulder (149), which faces outward or inward on one side, for the spring element (148).

21. The device as claimed in claim 16 or 17, wherein the spring element (148) is designed as a compression spring, one end of which is supported on an intermediate member (136) and the other end of which is supported on the centering element (68) on the clamping shank side.

22. The device as claimed in one of claims 16 to 21, wherein the axially projecting ends (134), on the clamping shank side, of the clamping elements (24, 24') form an axially central seat (142) for an intermediate member (136) which is designed as a roller or ball.

23. The device as claimed in one of claims 1 to 22, wherein a spring member (91) which presses the centering cage gently toward the tool head (16) is arranged between the clamping shank (12) and the centering cage (66).

24. The device as claimed in claim 23, wherein the spring member (91) is designed as a helical compression spring which is gently preloaded between the clamping shank (16) and the centering element (68) on the clamping shank side.

25. The device as claimed in one of claims 1 to 24, wherein the clamping elements (25) are held in their clamping position under the action of the force of the actuating mechanism (26), and wherein a spring force can additionally be applied to the clamping elements (25) in the clamping direction of the actuating mechanism (26).

26. The device as claimed in claim 25, wherein the clamping elements (25), in their release position, are preloaded in the clamping direction under the action of the spring force.

27. The device as claimed in claim 25 or 26, wherein the spring force decreases in the clamping direction.

28. The device as claimed in claim 27, wherein the clamping elements (25), in their clamping position, are substantially free of preloading with respect to the spring force.

29. The device as claimed in one of claims 1 to 28, wherein two clamping elements or clamping-element pairs (24, 24'), which lie opposite one another in the clamping direction, are connected to one another, preferably integrally, via a spring element (flexural joint 34) which, in the release position of the actuating mechanism (26), is preloaded in the clamping direction.

30. The device as claimed in claim 29, wherein the spring element (flexural joint 34) is completely or virtually stress-free in the clamping position of the actuating mechanism (26).

31. The device as claimed in one of claims 1 to 30, wherein two clamping elements or clamping-element pairs (24, 24'), which lie radially opposite one another, are integrally connected to one another, at their end on the clamping shank side, via a flexural joint (34), so as to form a single-piece clamping insert (32), and can be radially bent with respect to one another about the bending axis of the flexural joint (34) by means of the actuating mechanism (26).

32. The device as claimed in claim 31, wherein the flexural joint (34) of the clamping insert (32) is in the form of a U-shaped spring loop which projects axially beyond the ends, on the clamping shank side, of the clamping elements or clamping-element pairs (24, 24').

33. The device as claimed in claim 31 or 32, wherein the clamping-element pairs (24, 24'), at their ends on the clamping shank side, have clamping elements (25) which are integrally connected to one another in pairs via a second flexural joint (36), which is oriented transversely with respect to the flexural joint (34), and can be bent with respect to one another about their bending axis (36) with the aid of the actuating mechanism (26).

34. The device as claimed in one of claims 31 to 33, wherein, in the clamping position of the clamping elements (25), at least the first flexural joint (34) is free from preloading and in the release position is spring-preloaded.

35. The device as claimed in one of claims 1 to 30, wherein two clamping elements or clamping-element pairs (24, 24'), which lie radially opposite one another, are designed as separate parts which bear directly or indirectly, via an intermediate member (136), against one another so as to form a clamping insert (32) at their ends (134) on the clamping shank side or at an axial distance therefrom, and, via the actuating mechanism (26), can be pivoted with respect to one another about a tilting axis (140) formed by the contact point (138).

36. The device as claimed in claim 35, wherein the clamping-element pairs (24, 24'), at their ends (134) on the clamping shank side, have clamping elements (25) which are integrally connected to one another in pairs via a flexural joint (36), which is oriented transversely with respect to the tilting axis (140), and can be bent with respect to one another about their bending axis with the aid of the actuating mechanism (26).

37. The device as claimed in claim 35 or 36, wherein the ends, on the clamping shank side, of the clamping elements or clamping-element pairs (24, 24') are of convex design on the outside and/or on the inside in the region of the contact point (138).

38. The device as claimed in one of claims 35 to 37, wherein the intermediate member (136) is designed as a roller or ball which is fitted loosely between the ends on the clamping shank side.

39. The device as claimed in one of claims 34 to 38, wherein the ends (34) on the clamping shank side are held together by means of a spring, preferably by means of a spring washer (168) or a spring clip (170).

40. The device as claimed in one of claims 1 to 39, wherein the actuating mechanism (26) has two pressure-exerting pieces, which can be fitted into in each case one recess (46), which is open on the end side and radially inward, in the clamping elements or clamping-element pairs (24, 24') which lie radially opposite one another, and at least one screw element (50) for adjusting the distance between the pressure-exerting pieces (48).

41. The device as claimed in claim 40, wherein the screw element (50) is designed as a differential screw, the threaded parts (51) of which engage in oppositely directed internal screw threads (52), which are flush with one another and are radially oriented, of the pressure-exerting pieces (48).

42. The device as claimed in claim 40 or 41, wherein the pressure-exerting pieces (48) are integrally connected to one another via a flexural joint (49) which is preferably designed as a spring loop.

43. The device as claimed in one of claims 40 to 42, wherein the screw element (50) is designed as a threaded bolt which engages through an internal screw thread (52) of one of the pressure-exerting pieces (48) and the end face of which bears against an abutment (53) of the other pressure-exerting piece (48).

44. The device as claimed in claim 43, wherein a second threaded bolt, the end face of which forms the abutment (53) for the first threaded bolt, engages through an internal screw thread (52) of the other pressure-exerting piece (48).

45. The device as claimed in one of claims 40 to 44, wherein the pressure-exerting pieces (48) have a profile which is wedge-shaped or convex toward the adjacent clamping-element pair (24, 24').

46. The device as claimed in claim 45, wherein the convex or wedge-shaped profile of the pressure-exerting pieces (48) is divided into an in-feed slope which is relatively shallow in the in-feed direction and an adjoining relatively steep clamping slope.

47. The device as claimed in one of claims 40 to 44, wherein the pressure-exerting pieces (48) have a pressure-exerting surface (172) which is partially cylindrical toward the adjacent clamping element (24) and rolls along the bearing surface (174) thereof during the clamping operation.

48. The device as claimed in claim 47, wherein the clamping elements (24) have a bearing surface (174) which faces toward the respective pressure-exerting piece (48) and is preferably planar, and wherein the pressure-exerting surfaces (172) of the pressure-exerting pieces (48) have an apex surface (172') which, in the clamped position of the pressure-exerting pieces, bears against the bearing surface (174) with surface-to-surface contact.

49. The device as claimed in one of claims 40 to 48, wherein the internal screw threads (52) of the pressure-exerting pieces (48) and the threaded parts (51) of the screw element (50) have a clearance which permits tolerance compensation.

50. The device as claimed in one of claims 1 to 49, wherein the clamping elements (25) and/or the pressure-exerting pieces (48) have a wear-resistant and/or friction-reducing surface coating or are surface-hardened.

51. The device as claimed in one of claims 33 to 50, wherein the clamping elements (25) of each clamping-element pair (24, 24') are separated from one another by one axial gap (64) which preferably continues all the way to the corresponding flexural joint (36).

52. The device as claimed in claim 51, wherein the screw element (50) has at least one engagement piece (58) for a screwdriver, which is radially accessible through one of the axial gaps (64).

53. The device as claimed in one of claims 1 to 52, wherein the clamping shank (12) and the hollow shank (14) have apertures (60, 62) which are flush with one another, providing access to the actuating mechanism by means of a screwdriver.

54. The device as claimed in one of claims 40 to 53, wherein the pressure-exerting pieces (48) each have a driver cam (54) which bears against a radially outwardly facing stop surface (56) of the associated clamping element or clamping-element pair (24, 24') and drives the latter with it during actuation toward the release position.

55. The device as claimed in one of claims 31 to 54, wherein the clamping insert (32), by way of its clamping shoulders (38) on the clamping shank side, can be locked to the clamping shank (12) in the manner of a bayonet closure and, in the locking position, can be secured against rotation in a form-fitting manner.

56. The device as claimed in one of claims 31 to 55, wherein the clamping surfaces (42) on the clamping shank side and the associated clamping shoulders (38) of the clamping elements (25) are oriented substantially in a radial plane.

57. The device as claimed in one of claims 31 to 56, wherein the clamping surfaces (44) on the hollow shank side and the associated clamping shoulders (40) of the clamping elements (25) are designed as inclined or cone surfaces which diverge radially outward with respect to the clamping shoulders (38) and clamping surfaces (42) on the clamping shank side.

58. The device as claimed in one of claims 31 to 57, wherein the clamping shoulders (40), on the hollow shank side, of the clamping elements (25) are delimited in the circumferential direction by substantially radially oriented delimiting edges (39).

59. The device as claimed in one of claims 31 to 58, wherein the clamping shoulders (40), on the hollow shank side, of the clamping elements (25) are delimited in the radial direction by a delimiting edge (41) which is oriented substantially in the circumferential direction.

60. The device as claimed in claim 58 or 59, wherein at least one of the delimiting edges (39, 41) is convexly rounded or beveled.

61. The device as claimed in one of claims 31 to 60, wherein the clamping shoulders (38, 40) of the clamping elements (25) of each clamping-element pair (24, 24') include a central angle, with respect to the clamping shank axis, of from 30° to 120°, preferably 50° to 90°, with one another.

62. The device as claimed in one of claims 55 to 61, wherein the clamping insert (32), in its locking position, is secured against rotation by means of a locking bolt (110) which penetrates through the clamping surface (42) of the clamping shank (12) in an axially parallel direction and engages in a form-fitting manner in a recess, which is open at the radial edge, in one of the clamping elements or clamping-element pairs.

63. The device as claimed in one of claims 55 to 62, wherein the clamping insert (32) can be fitted into the clamping shank (12), optionally rotated through 180°, and can be locked therein.

64. The device as claimed in one of claims 31 to 63, wherein the centering element (68) on the clamping shank side has an axially central pocket (88) for holding the spring loop, which forms the first flexural joint (34) and projects axially beyond the clamping insert (32), in such a manner that it floats in the axial and radial directions.

65. The device as claimed in one of claims 35 to 64, wherein the centering element (68) on the clamping shank side has an axially central pocket (88) for holding the ends (134), on the clamping shank side, of the clamping elements (25), which ends form the tilting joint and project axially beyond the clamping insert (32), in such a manner that they float in the axial and radial directions.

66. The device as claimed in claim 65, wherein the axially projecting ends (134), on the clamping shank side, of the clamping elements (24, 24'), in the clamping position, complement one another to form a conical outer surface which tapers toward the clamping shank (12) and, in the release position, complement one another to form a cylindrical outer surface.

67. The device as claimed in one of claims 1 to 66, wherein the hollow shank (14) has an outer surface (20) which tapers conically toward its free end, and the clamping shank (12) has a seat (18) of corresponding conicity.

68. The device as claimed in one of claims 1 to 67, wherein the hollow shank is delimited by a planar surface (28), which is designed as an annular shoulder and, in the clamping position of the clamping elements (25), can be pressed against an annular planar surface (30) of the clamping shank (12).

69. The device as claimed in one of claims 1 to 68, wherein the tool shank (14), which is designed as a hollow shank, at its free end has at least one groove for a driver (154) on the clamping shank side to engage in, and wherein the clamping shank (12) has at least one bore (158), which is laterally offset with respect to an axial plane (156), for holding a bending bolt (160), which engages in the groove or in a recess in the hollow shank, and in doing so brings about a certain play release preferably in the circumferential direction, and is of flexurally elastic design.

70. The device as claimed in claim 69, wherein the bore (158) is designed as a threaded bore for receiving the bending bolt (160) which has a corresponding screw thread.

71. The device as claimed in claim 70, wherein the bending bolt (160) has a threaded section (162), a bending section (164) and a driver section (166) which is thickened in the manner of a hammer at the free end of the bending section.

72. The device as claimed in one of claims 69 to 71, wherein two bores (158), which are arranged mirror-symmetrically with respect to the axial plane (156), are provided for optionally receiving a bending bolt (160).

73. The device as claimed in one of claims 40 to 72, wherein the pressure-exerting pieces (48), on their mutually facing sides, delimit a gap into which an ejector wedge (89), which projects on the hollow shank side, preferably at the centering element (70) on the hollow shank side, and can be subjected to an axial force under the action of the pressure-exerting pieces (48), engages.

74. The device as claimed in claim 73, wherein the gap edges (90), which face toward the ejector wedge (89), of the pressure-exerting pieces (48) are beveled in the shape of a wedge.

75. The device as claimed in one of claims 53 to 74, which has a closure ring (94) which engages around the clamping shank (12) on the outside, can be sealed with respect to the clamping shank at its two edges and can be displaced in the axial direction to a limited extent with respect to the clamping shank (12), between a limit position in which it closes off the apertures (60) and a limit position in which it opens the apertures (60).

76. The device as claimed in claim 75, wherein the clamping shank (12), in the region of the apertures (60), has an annular turned groove (96), which is adjoined, via in each case one annular step, by a run-up area (98) of larger diameter toward the end side of the clamping shank (12) and by a guide area (100) of larger diameter toward the root of the clamping shank, and wherein the closure ring (94) has in each case one sealing ring which in the annular turned groove (96) and in the guide area (100) bears against the outer surface of the clamping shank (12).

77. The device as claimed in claim 76, wherein, in the closed position of the closure ring (94), at least one of the sealing rings (102, 104) can be latched into an annular latching indentation in the clamping shank (12).

## Revendications

1. Dispositif pour relier une tête d'outil (16) présentant une tige d'outil (14) à une tige de serrage (12) présentant un logement (18) pour la tige d'outil (14) et disposée de préférence sur la face avant dans une broche de machine (10) à l'aide d'un mécanisme de serrage (22), lequel présente au moins deux éléments de serrage (25) disposés à une distance angulaire l'un de l'autre et reliant entre eux par adhérence dans leur position de serrage la tige d'outil (14) conçue de préférence comme une tige creuse et la tige de serrage (12), et un mécanisme de commande (26) pour le réglage limité des éléments de serrage (25) entre une position de libération et une position de serrage, **caractérisé en ce que** le mécanisme de serrage (22) est recouvert sur les extrémités côté avant de ses éléments de serrage (25) par un élément de centrage (68, 70) du type piston et **en ce que** les éléments de centrage (68, 70) sont reliés de façon fixe entre eux par des nervures (74) parallèles à l'axe en formant une cage de centrage (66) recouvrant le mécanisme de serrage (22) avec un jeu axial et s'engagent chacun dans un évidement (76, 78) centré par rapport à l'axe et de préférence cylindrique dans la zone de fond de la tige de serrage et de la tige creuse (14) en laissant libre un espace libre (77) axial.

2. Dispositif selon la revendication 1, **caractérisé en ce que** la cage de centrage (66) peut être sollicitée avec une pression de fluide sur son élément de centrage (68) côté tige de serrage dans le sens de la tige d'outil (14).

3. Dispositif selon la revendication 1 ou 2, **caractérisé en ce que** la cage de centrage (66) est conçue comme un élément d'éjection qui sépare axialement la tige d'outil (14) de la tige de serrage (12) sous l'action du mécanisme de commande (26) lors du desserrement du mécanisme de serrage (22).

4. Dispositif selon l'une quelconque des revendications 1 à 3, **caractérisé en ce que** les nervures (74) sont agencées dans des cavités libres (72) continues dans le sens axial des éléments de serrage (25).

5. Dispositif selon l'une quelconque des revendications 1 à 4, **caractérisé en ce que** les nervures sont conçues de façon creuse en formant chacune un tuyau pour réfrigérant (74) et **en ce que** les éléments de centrage (68, 70) de type piston présentent des ouvertures d'entrée et de sortie (80, 82) communiquant avec les tuyaux pour réfrigérant (74).

6. Dispositif selon la revendication 5, **caractérisé en ce qu'**au moins l'un des éléments de centrage (68, 70) présente deux alésages d'emboîtement (79, 81) décalés réciproquement de 180° et parallèles à l'axe, dans lesquels les tuyaux pour réfrigérant (74) sont emboîtés et éventuellement collés ou brasés ou soudés.

7. Dispositif selon l'une quelconque des revendications 1 à 6, **caractérisé en ce que** l'élément de centrage (68) côté tige de serrage présente au moins un orifice d'entrée (80) parallèle à l'axe et communiquant avec les tuyaux pour réfrigérant.

8. Dispositif selon la revendication 7, **caractérisé en ce que** l'orifice d'arrivée (80) est relié à un canal central (85) côté tige de serrage au moyen de canaux d'arrivée (83) inclinés et sans arêtes.

9. Dispositif selon l'une quelconque des revendications 1 à 8, **caractérisé en ce que** l'élément de centrage (68) côté tige de serrage est rendu étanche avec un joint radial (84) à l'intérieur de l'évidemmen (76) correspondant.

10. Dispositif selon l'une quelconque des revendications 5 à 9, **caractérisé en ce que** l'élément de centrage (70) côté tige creuse présente un orifice de sortie (82) central et communiquant de préférence avec les tuyaux pour réfrigérant (74) de préférence au moyen de canaux de sortie (87) inclinés et sans arêtes.

11. Dispositif selon l'une quelconque des revendications 8 à 10, **caractérisé en ce que** le canal central (85) côté tige de serrage, les canaux d'arrivée (83), les tuyaux à réfrigérant (74), les canaux de sortie (87) et l'orifice de sortie (82) central présentent une section d'écoulement sensiblement constante ou augmentant ou diminuant toujours par tronçons.

12. Dispositif selon l'une quelconque des revendications 5 à 11, **caractérisé en ce que** l'élément de centrage (70) côté tige creuse peut être rendu étanche avec un joint (86) qui entoure l'orifice de sortie (82) côté extérieur à l'intérieur de l'évidemment (78) correspondant.

13. Dispositif selon la revendication 12, **caractérisé en ce que** le joint (86) est réalisé comme un joint axial.

14. Dispositif selon la revendication 13, **caractérisé en ce que** le joint (86) est conçu comme un joint à lèvres, dont la lèvre d'étanchéité (87) peut être appuyée sous l'effet de la pression du réfrigérant contre une surface de fond ou une surface d'enveloppe de l'évidement (78) côté tige creuse.

15. Dispositif selon l'une quelconque des revendications 1 à 14, **caractérisé en ce que** les éléments de serrage (25) de l'insert de serrage (32) sont insérés de façon amovible dans la cage de centrage (66).

16. Dispositif selon l'une quelconque des revendications 1 à 15, **caractérisé en ce qu'**un élément de ressort (148), prétendant la cage de centrage en direction de la tige de serrage (66), est disposé entre l'insert de serrage (32) et la cage de centrage (66).

17. Dispositif selon la revendication 16, **caractérisé en ce que** l'élément de ressort (148) est conçu en même temps comme un organe de centrage pour l'insert de serrage (32).

18. Dispositif selon la revendication 16 ou 17, **caractérisé en ce que** l'élément de ressort (148) est conçu comme un ressort de pression cylindrique qui s'engage par l'une de ses extrémités dans des évidements cylindriques partiels (150, disposés côté tige de serrage, des éléments de serrage (24, 24') et est soutenu par son autre extrémité sur l'élément de centrage (68) côté tige de serrage.

19. Dispositif selon l'une quelconque des revendications 16 à 18, **caractérisé en ce que** les éléments de serrage (24) de l'insert de serrage sont appuyés de façon radiale vers l'extérieur ou vers l'intérieur au moyen de l'élément de ressort (148).

20. Dispositif selon la revendication 19, **caractérisé en ce que** les éléments de serrage (24) présentent chacun un épaulement de soutien (149) incliné et dirigé unilatéralement vers l'intérieur ou vers l'extérieur pour l'élément de ressort (148).

21. Dispositif selon la revendication 16 ou 17, **caractérisé en ce que** l'élément de ressort (148) est conçu comme un ressort de pression, qui est soutenu par une extrémité sur un élément intermédiaire (136) et par l'autre extrémité sur l'élément de centrage (68) côté tige de serrage.

22. Dispositif selon l'une quelconque des revendications 16 à 21, **caractérisé en ce que** les extrémités (134), disposées côté tige de serrage et débordant axialement, des éléments de serrage (24, 24') forment un logement (142) centré par rapport à l'axe pour un élément intermédiaire (136) conçu comme roulette ou bille.

23. Dispositif selon Tune quelconque des revendications 1 à 22, **caractérisé en ce qu'**un organe de ressort (91) appuyant la cage de centrage légèrement en direction de la tête d'outil (16) est disposé entre la tige de serrage (12) et la cage de centrage (66).

24. Dispositif selon la revendication 23, **caractérisé en ce que** l'organe de ressort (91) est conçu comme un ressort de pression cylindrique légèrement prétendu entre la tige de serrage (16) et l'élément de centrage (68) côté tige de serrage.

25. Dispositif selon l'une quelconque des revendications 1 à 24, **caractérisé en ce que** les éléments de serrage (25) sont maintenus dans leur position de serrage sous l'effet de la force du mécanisme de commande (26) et **en ce que** les éléments de serrage (25) peuvent être sollicités en supplément avec une force de ressort dans le sens de serrage du mécanisme de commande (26).

26. Dispositif selon la revendication 25, **caractérisé en ce que** les éléments de serrage (25) sont prétendus dans leur position de libération sous l'effet de la force de ressort dans le sens de serrage.

27. Dispositif selon la revendication 25 ou 26, **caractérisé en ce que** la force de ressort diminue dans le sens de serrage.

28. Dispositif selon la revendication 27, **caractérisé en ce que** les éléments de serrage (25) sont sensiblement sans prétension dans leur position de serrage par rapport à la force de ressort.

29. Dispositif selon l'une quelconque des revendications 1 à 28, **caractérisé en ce que** deux éléments de serrage ou paires d'éléments de serrage (24, 24') se faisant face dans le sens de serrage sont reliés entre eux de préférence d'un seul bloc au moyen d'un élément de ressort (articulation de flexion 34) prétendu dans le sens de serrage dans la position de libération du mécanisme de commande (26).

30. Dispositif selon la revendication 29, **caractérisé en ce que** l'élément de ressort (articulation de flexion 34), est complètement ou pratiquement détendu dans la position de serrage du mécanisme de commande (26).

31. Dispositif selon l'une quelconque des revendications 1 à 30, **caractérisé en ce que** deux éléments de serrage ou paires d'éléments de serrage (24, 24') se faisant face radialement sont reliés entre eux d'un seul bloc au moyen d'une articulation de flexion (34) sur leur extrémité côté tige de serrage en formant un insert de serrage (32) d'un seul tenant et peuvent plier radialement de façon réciproque au moyen du mécanisme de commande (26) autour de l'axe de flexion de l'articulation de flexion (34).

32. Dispositif selon la revendication 31, **caractérisé en ce que** l'articulation de flexion (34) de l'insert de serrage (32) présente la forme dune boucle de ressort en forme de U, débordant axialement sur les extrémités côté tige de serrage des éléments de serrage ou des paires d'éléments de serrage (24, 24').

33. Dispositif selon la revendication 31 ou 32, **caractérisé en ce que** les paires d'éléments de serrage (24, 24') présentent sur leurs extrémités côté tige de serrage des éléments de serrage (25) reliés entre eux d'un seul bloc par paires au moyen d'une deuxième articulation de flexion (36) orientée transversalement à l'articulation de flexion (34) et pouvant tourner réciproquement autour de leur axe de flexion (36) à l'aide du mécanisme de commande (26).

34. Dispositif selon l'une quelconque des revendications 31 à 33, **caractérisé en ce qu'**au moins la première articulation de flexion (34) est sans prétension dans la position de serrage des éléments de serrage (25) et est prétendue de façon élastique dans la position de libération.

35. Dispositif selon l'une quelconque des revendications 1 à 30, **caractérisé en ce que** deux éléments de serrage ou paires d'éléments de serrage (24, 24') se faisant face radialement sont conçus comme des pièces séparées, qui s'appuient de façon réciproque directement ou indirectement au moyen d'un élément intermédiaire (136) en formant un insert de serrage (132) sur leurs extrémités (134) côté tige de serrage ou à distance axiale de celles-ci et peuvent pivoter de façon réciproque au moyen du mécanisme de commande (26) autour d'un axe de basculement (140) formé par le point d'appui (138).

36. Dispositif selon la revendication 35, **caractérisé en ce que** les paires d'éléments de serrage (24, 24') présentent sur leurs extrémités (134) côté tige de serrage des éléments de serrage (25) reliés entre eux d'un seul tenant par paires au moyen d'une articulation de flexion (36) orientée transversalement à l'axe de basculement (140) et pouvant plier de façon réciproque autour de leur axe de flexion à l'aide du mécanisme de commande (26).

37. Dispositif selon la revendication 35 ou 36, **caractérisé en ce que** les extrémités côté tige de serrage des éléments de serrage ou paires d'éléments de serrage (24, 24') sont conçues de façon bombée côté extérieur et/ou côté intérieur dans la zone du point d'appui (138).

38. Dispositif selon l'une quelconque des revendications 35 à 37, **caractérisé en ce que** l'élément intermédiaire (136) est conçu comme une roulette ou une bille insérée de façon amovible entre les extrémités côté tige de serrage.

39. Dispositif selon l'une quelconque des revendications 34 à 38, **caractérisé en ce que** les extrémités (134) côté tige de serrage sont maintenues ensemble au moyen d'un ressort, de préférence au moyen d'une bague à ressort (168) ou d'une bride à ressort (170).

40. Dispositif selon l'une quelconque des revendications 1 à 39, **caractérisé en ce que** le mécanisme de commande (26) présente deux pièces de pression pouvant être insérées chacune dans un évidement (46) ouvert vers l'intérieur sur la face avant ou sur un plan radial des éléments de serrage ou paires d'éléments de serrage (24, 24') se faisant face radialement ou au moins un élément à vis (50) pour le réglage de la distance entre les pièces de pression (48).

41. Dispositif selon la revendication 40, **caractérisé en ce que** l'élément à vis (50) est conçu comme une vis différentielle, qui s'engage avec ses parties filetées (51) dans des filetages intérieurs (52) opposés, alignés entre eux et orientés dans le sens radial, des pièces de pression (48).

42. Dispositif selon la revendication 40 ou 41, **caractérisé en ce que** les pièces de pression (48) sont reliées entre elles d'un seul tenant au moyen d'une articulation de flexion (49) conçue de préférence comme une boucle de ressort.

43. Dispositif selon l'une quelconque des revendications 40 à 42, **caractérisé en ce que** l'élément à visser (50) est conçu comme un boulon fileté passant dans un filetage intérieur (52) de l'une des pièces de pression (48) et s'appuyant avec sa surface frontale contre une butée (53) de l'autre pièce de pression (48).

44. Dispositif selon la revendication 43, **caractérisé en ce qu'**un deuxième boulon fileté, dont la surface frontale forme la butée (53) pour le premier boulon fileté, passe par un filetage intérieur (52) de l'autre pièce de pression (48).

45. Dispositif selon l'une quelconque des revendications 40 à 44, **caractérisé en ce que** les pièces de pression (48) présentent un profil bombé ou en forme de clavette en direction de la paire voisine d'éléments de serrage (24, 24').

46. Dispositif selon la revendication 45, **caractérisé en ce que** le profil bombé ou en forme de clavette des pièces de pression (48) est subdivisé en un chanfrein d'avance plus plat dans le sens d'avance et un chanfrein de serrage plus raide consécutif au premier.

47. Dispositif selon l'une quelconque des revendications 40 à 44, **caractérisé en ce que** les pièces de pression (48) présentent une surface de pression (172) partiellement cylindrique en direction de l'éléme de serrage (24) voisin et roulant sur la surface d'appui (174) de l'élément (24) lors de l'opération de serrage.

48. Dispositif selon la revendication 47, **caractérisé en ce que** les éléments de serrage (24) présentent une surface d'appui (174) de préférence plane et tournée vers la pièce de pression (48) concernée et **en ce que** les surfaces de pression (172) des pièces de pression (48) présentent une surface supérieure (172') s'appuyant dans la position de serrage des pièces de pression contre la surface d'appui (174).

49. Dispositif selon l'une quelconque des revendications 40 à 48, **caractérisé en ce que** les filetages intérieurs (52) des pièces de pression (48) et les parties filetées (51) de l'élément à vis (50) présentent un jeu qui autorise la compensation de tolérance.

50. Dispositif selon l'une quelconque des revendications 1 à 49, **caractérisé en ce que** les éléments de serrage (25) et/ou les pièces de pression (48) portent un revêtement de surface résistant à l'usure et/ou réduisant la friction ou sont trempés en surface.

51. Dispositif selon l'une quelconque des revendications 33 à 50, **caractérisé en ce que** les éléments de serrage (25) de chaque paire d'éléments de serrage (24, 24') sont séparés les uns des autres par une fente axiale (64) continue de préférence jusqu'à l'articulation de flexion (36) concernée.

52. Dispositif selon la revendication 51, **caractérisé en ce que** l'élément à vis (50) présente au moins un engrènement (58), accessible radialement par Tune des fentes axiales (64), pour un outil à visser.

53. Dispositif selon l'une quelconque des revendications 1 à 52, **caractérisé en ce que** la tige de serrage (12) et la tige creuse (14) présentent des passages (60,62) alignés entre eux pour l'accès au mécanisme de commande au moyen d'un outil de vissage.

54. Dispositif selon Tune quelconque des revendications 40 à 53, **caractérisé en ce que** les pièces de pression (48) présentent chacune une came d'entraînement (54) qui s'appuie contre une surface de butée (56) dirigée radialement vers l'extérieur de l'élément de serrage ou de la paire spécifique d'éléments de serrage (24, 24') et l'entraîne lors de l'actionnemen dans le sens de la position de libération.

55. Dispositif selon l'une quelconque des revendications 31 à 54, **caractérisé en ce que** l'insert de serrage (32) avec ses épaulements de serrage (38) côté tige de serrage peut être verrouillé à la façon d'une baïonnette avec la tige de serrage (12) et peut être bloqué contre la torsion par conjugaison de forme dans la position de verrouillage.

56. Dispositif selon l'une quelconque des revendications 31 à 55, **caractérisé en ce que** les surfaces de serrage (42) côté tige de serrage et les épaulements de serrage (38) spécifiques des éléments de serrage (25) sont orientés sensiblement dans un plan radial.

57. Dispositif selon l'une quelconque des revendications 31 à 56, **caractérisé en ce que** les surfaces de serrage (44) côté tige creuse et les épaulements de serrage (40) spécifiques des éléments de serrage (25) sont conçus comme des surfaces inclinées ou surfaces coniques qui divergent radialement vers l'extérieur par rapport aux surfaces de serrage (42) et épaulements de serrage (38) côté tige de serrage.

58. Dispositif selon l'une quelconque des revendications 31 à 57, **caractérisé en ce que** les épaulements de serrage (40) côté tige creuse des éléments de serrage (25) sont limités dans le sens périphérique par des arêtes de délimitation (39) orientées sensiblement dans le sens radial.

59. Dispositif selon l'une quelconque des revendications 31 à 58, **caractérisé en ce que** les épaulements de serrage (40) côté tige creuse des éléments de serrage (25) sont limités dans le sens radial par une arête de délimitation (41) sensiblement orientée dans le sens périphérique.

60. Dispositif selon la revendication 58 ou 59, **caractérisé en ce qu'**au moins l'une des arêtes de délimitation (39, 41) a une courbure convexe ou est chanfreinée.

61. Dispositif selon l'une quelconque des revendications 31 à 60, **caractérisé en ce que** les épaulements de serrage (38, 40) des éléments de serrage (25) de chaque paire d'éléments de serrage (24, 24') forment entre eux un angle central rapporté à l'axe de la tige de serrage de 30° à 120°, de préférence 50° à 90°.

62. Dispositif selon l'une quelconque des revendications 55 à 61, **caractérisé en ce que** l'insert de serrage (32) est bloqué contre la torsion dans sa position de verrouillage au moyen d'un boulon de blocage (110) qui traverse la surface de serrage (42) de la tige de serrage (12) de façon parallèle à l'axe et s'engage par conjugaison de forme dans un évidement ouvert sur le bord dans le sens radial de l'un des éléments ou de l'une des paires d'éléments de serrage.

63. Dispositif selon l'une quelconque des revendications 55 à 62, **caractérisé en ce que** l'insert de serrage (32) peut être inséré dans la tige de serrage (12) tournée éventuellement de 180° et qui peut y être verrouillé.

64. Dispositif selon l'une quelconque des revendications 31 à 63, **caractérisé en ce que** l'élément de centrage (68) côté tige de serrage présente une poche (88) centrée par rapport à l'axe pour le logement flottant sur le plan axial et radial de la boucle de ressort qui forme la première articulation de flexion (34) et déborde de l'insert de serrage (32) sur un plan axial.

65. Dispositif selon l'une quelconque des revendications 35 à 64, **caractérisé en ce que** l'élément de centrage (68) côté tige de serrage présente une poche (88) centrée par rapport à l'axe pour le logement flottant sur un plan axial et radial des extrémités (134), formant l'articulation de basculement et débordant axialement de l'insert de serrage (32), des éléments de serrage (25).

66. Dispositif selon la revendication 65, **caractérisé en ce que** les extrémités (134) côté tige de serrage, débordant dans le sens axial, des éléments de serrage (24, 24') se complètent pour former une surface extérieure conique et se rétrécissant vers la tige de serrage (12) dans la position de serrage et une surface extérieure cylindrique dans la position de libération.

67. Dispositif selon Tune quelconque des revendications 1 à 66, **caractérisé en ce que** la tige creuse (14) présente une surface extérieure (20) se rétrécissant en forme de cône vers son extrémité libre et la tige de serrage (12) présente un logement (18) de forme conique appropriée.

68. Dispositif selon l'une quelconque des revendications 1 à 67, **caractérisé en ce que** la tige creuse est limitée par une surface plane (28) réalisée comme un épaulement annulaire, qui peut être appuyée dans la position de serrage des éléments de serrage (25) contre une surface plane (30) de forme annulaire de la tige de serrage (12).

69. Dispositif selon l'une quelconque des revendications 1 à 68, **caractérisé en ce que** la tige d'outil (14) conçue comme une tige creuse présente sur son extrémité libre au moins une rainure pour l'engagement d'un entraîneur (154) côté tige de serrage et **en ce que** la tige de serrage (12) présente au moins un alésage (158) décalé sur le côté par rapport à un plan axial (156) pour le logement d'un boulon de flexion (160) réalisé de façon élastique et flexible, s'engageant dans la rainure ou dans un évidement de la tige creuse et entraînant alors une libération de jeu ciblée de préférence dans le sens périphérique.

70. Dispositif selon la revendication 69, **caractérisé en ce que** l'alésage (158) présente un alésage fileté pour le logement du boulon de flexion (160) présentant un filetage approprié.

71. Dispositif selon la revendication 70, **caractérisé en ce que** le boulon de flexion (160) présente une partie filetée (162), une partie de flexion (164) et une partie d'entraînement (166) épaissie à la façon d'un marteau sur l'extrémité libre de la partie de flexion.

72. Dispositif selon Tune quelconque des revendications 69 à 71, **caractérisé en ce qu'**il est prévu deux alésages (158) disposés de façon symétrique par rapport au plan axial (156) pour le logement éventuel d'un boulon de flexion (160).

73. Dispositif selon l'une quelconque des revendications 40 à 72, **caractérisé en ce que** les pièces de pression (48) délimitent sur leurs côtés tournés l'un vers l'autre une fente, dans laquelle s'engage une clavette d'éjection (89) débordant sur le côté tige creuse, de préférence sur l'élément de centrage (70) côté tige creuse, et pouvant être sollicitée avec une force axiale sous l'effet des pièces de pression (48).

74. Dispositif selon la revendication 73, **caractérisé en ce que** les bords de séparation (90), dirigés vers la clavette d'éjection (89), des pièces de pression (48) sont chanfreinés avec une forme de clavette.

75. Dispositif selon l'une quelconque des revendications 53 à 74, **caractérisé par** une bague de fermeture (94) qui entoure la tige de serrage (12) côté extérieur, peut être rendue étanche sur ses deux bords par rapport à la tige de serrage et peut coulisser de façon limitée dans le sens axial par rapport à la tige de serrage (12) entre une position extrême qui ferme les passages (60) et une position extrême qui les libère.

76. Dispositif selon la revendication 75, **caractérisé en ce que** la tige de serrage (12) présente dans la zone des passages (60) un vissage (96) de forme annulaire, qui est suivi à chaque fois, au moyen d'un niveau annulaire, d'une zone d'entrée (98) de diamètre supérieur en direction de la face frontale de la tige de serrage (12) et d'une zone de guidage (100) de diamètre supérieur en direction de la racine de la tige de serrage, et **en ce que** la bague de fermeture (94) présente une bague d'étanchéité qui s'appuie contre la surface extérieure de la tige de serrage (12) dans le vissage (96) de forme annulaire et dans la zone de guidage (100).

77. Dispositif selon la revendication 76, **caractérisé en ce qu'**au moins l'une des bagues d'étanchéité (102, 104) peut être enclenchée dans une cavité d'arrêt de forme annulaire de la tige de serrage (12) dans la position de fermeture de la bague de fermeture (94).
